# EUROPEAN PATENT APPLICATION

(11) **EP 1 213 675 A2**
(43) Date of publication of application: **12.06.2002**
(21) Application number: 01128914.7
(22) Date of filing: 05.12.2001
(51) Int. Cl.: G06F 17/60, G06F 17/30

(54) **Information providing method and system and information providing apparatus**

(30) Priority: 07.12.2000 JP 2000373476
(71) Applicant: SONY CORPORATION, Tokyo (JP)
(72) Inventor: Ogawa, Koji, c/o Sony Marketing (Japan) Inc., Tokyo, 108-0074 (JP)
(74) Representative: Müller - Hoffmann & Partner

(57) **Abstract**

The present invention provides an information providing method which bilaterally enables users and information providers to provide desired information more efficiently.

An information provider initially registers information on a content to be provided into a service provider apparatus and then establishes a mail address. Next, the information provider notifies users of the established mail address by attaching the mail address to actual advertising media. Any user interested in the advertised content transmits a mail message to the electronic mail address. Upon receipt of the electronic mail inquiry from the interested user, the service provider apparatus establishes a home page exclusively available for the corresponding user and then provides desired information through linking registered information to the user specific home page. The service provider apparatus then notifies the user of the URL of the established home page.

## Description

### CROSS REFERENCE TO RELATED APPLICATIONS

This application claims priority to Japanese Patent Application No. JP 2000-373476 filed on December 7, 2000, the disclosure of application being herein incorporated by reference to the extent permitted by law.

### BACKGROUND OF THE INVENTION

### 1. Field of the Invention:

The present invention relates to a method and a system capable of providing arbitrary information transmitted via a communication network in a form capable of offering high utility for users, and yet, the present invention also relates to an information providing apparatus capable of properly collecting, controlling, and providing information required by users.

### 2. Description of the Related Art:

As a result of a fast dissemination or popularization of communication networks, it is no longer an exaggeration to say that nowadays all kinds of information are distributed via various communication networks, where information includes public information on advertisement of goods and services, contents of newspapers, magazines, TV broadcasting programs, and related information, operating hours of various facilities, event information, a variety of information recorded in a variety of dictionaries, official information from public offices, or the like.

Under such circumstances, it is quite important for those who receive required information to efficiently acquire only information of interest to themselves and eliminating as much unwanted information as possible. On the other hand, it is quite important for those who provide information to properly distribute pertinent information to only those who are interested on those information and related contents considered to be targets of the concerning information.

In order to efficiently provide or receive such useful information, a wide variety of artifices have been introduced. For example, by running in advertisements on TV broadcasting programs or newspapers, or inserting URL in posters, a method is also introduced, which guides those users willing of acquiring further details to access the inserted URL. Further, in order to efficiently acquire desired information, there is a method which enables users to register their favorite information pages as the one so-called "bookmarks". Further, there is such service called "web bookmark" which enables users to register their favorite URL in web pages owned by third parties.

Nevertheless, the above-cited artifices are not yet sufficient, and thus, there is a demand for more efficiently acquiring or providing desired information among the concerned parties.

For example, even though a certain URL is actually inserted in TV advertising programs or newspapers or posters, when users desire to access the corresponding page, users are obliged to memorize the objective URL in their brains or write it on paper, thus constituting a bothersome operation.

Further, in this case, there is a certain time lag from the time of noticing a particular advertisement to the time of actually accessing the corresponding URL, and as a result, users may lose their interest in the advertisement or they may have even forgotten their specific memory in regard to this advertisement in the meantime. In consequence, those business operators providing information on the related goods will have missed the chance to come into contact with potential customers.

In many cases, a URL inserted in advertisements rarely indicates information on desired goods directly, but normally, a URL inserted in the advertisements often indicates the top page of information on a certain business enterprise. Because of this, in order to correctly access actual information on the desired goods, users are obliged to repeat retrieving processes, and thus, they have to cope with the inconvenience of the complex operation involved therein.

Further, unless utilizing an identical personal computer, the above-referred "book-mark" registering process could not be effected. Actually, this registering process could not easily be implemented when utilizing a mobile communication apparatus. Further, in the case of changing the URL of a corresponding page, users are forced to change specific settings.

### SUMMARY OF THE INVENTION

Accordingly, it is preferable according to the present invention to efficiently provide a method for providing information, which enables users to receive only desired information based on easy operation and in a desired form, and yet, which enables information providers to properly provide information to such users interested in the corresponding information without missing a chance to come into contact with them.

Further, it is also preferable according to the present invention to provide a system for efficiently providing information, which enables users to receive only the desired information based on easy operation and in a desired form, and yet, which enables information providers to properly provide information to such users interested in the corresponding information without missing a chance to come into contact with them.

It is still further desirable according to the present invention to provide an information providing apparatus which is capable of efficiently providing information by enabling users to receive only desired information based on easy operation and in a desired form, and yet, enabling information providers to properly provide information to such users interested in the corresponding information without missing a chance to come into contact with them.

According to a preferred embodiment of the present invention, an information providing method is provided, including the following steps of: establishing an exclusive web page for a user; accepting a request from the user for provision of information on a requested content to be provided; and setting the exclusive web page to a condition permitting the user to view the information on the requested content to be provided.

It is preferable to further include: setting up an electronic mail address corresponding to the information on the requested content to be provided; notifying the user of at least part of the information on the requested content to be provided and the electronic mail address through an arbitrary method; receiving an electronic mail transmitted from the user to the notified electronic mail address as a request from the user for provision of corresponding information on the requested content to be provided; assigning the exclusive web page to the user, wherein the exclusive web page can be accessed from the user transmitting the received electronic mail; setting the exclusive web page to a condition permitting the user to at least view information corresponding to the requested information, wherein the information is more detailed than the notified information on the requested content to be provided ; and transmitting a reply mail at least including address information on the assigned web page to the transmitter of the received electronic mail. In addition, it is preferable that the notifying step in the information providing method according is performed by means of an arbitrary advertising medium including a TV commercial message and a poster or the like.

Also, it is preferable that the reply mail includes a password for accessing the exclusive web page as well as part of the information on the requested content to be provided.

Moreover, it is preferable that the information providing method according to another preferred embodiment of the present invention further includes the following steps of: establishing another web page permitting viewing an overview of information on contents to be provided; and accepting the request from the user for provision of the information on the content to be provided by recognizing that the user has requested provision of the content to be provided if the user selects information on a specific content to be provided from the another web page.

In addition, it is preferable that the information providing method according to still another preferred embodiment of the present invention further includes the step of setting another condition permitting viewing of further detailed information on the content to be provided, if there is a further request for provision of information on another content from a user already having the exclusive web page.

According to another preferred embodiment of the present invention, another information providing method has the exclusive web page further set to a condition permitting transmission of an electronic message to a provider of the information on the content to be provided.

In addition, it is preferable that the exclusive web page is further set to a condition permitting retrieving and viewing another content to be provided related to the information on the content to be provided.

Also, it is advantageous to have the exclusive web page further set to a condition permitting a user requesting provision of information on a same content to be provided, to write a message on a bulletin board.

Moreover, the exclusive web page may be further set to a condition permitting the user to write a memo on the exclusive web page.

In addition, an information providing method according to another preferred embodiment of the present invention has the information on the content to be provided corresponding to information inputted and stored by a provider of the information on the content to be provided, and information on the content to be provided set to the condition permitting the user to view the information being renewed in accordance to renewal of the stored information.

Furthermore, another preferred embodiment of the present invention presents an information providing method further including the steps of: recording a condition information indicating, a condition of request for provision of information on each content to be provided; and providing under request, the recorded condition information to a provider of the information on the content to be provided.

It is also preferable that, in an information providing method according to another preferred embodiment of the present invention, the condition information indicating a condition of request for provision of the information on the content to be provided includes a name of a person requesting provision of the information and a time of the request for provision.

In addition, it is preferable to have another information providing method according to a preferred embodiment of the present invention further including the following steps of: recording delivery information indicating a condition of delivery of information for each user; and providing the provider with information indicating a condition of request for provision of information including a request for provision of information on another content made by a user who has requested provision of the information on the content to be provided, wherein the providing is performed in response to a request from the provider of the information on the content to be provided.

Also, an information providing method according to still another preferred exemplary embodiment of the present invention is such that the information on the content to be provided includes advertising information for advertising a good and/or service.

According to another preferred embodiment of the present invention there is provided an information providing system including:
an information providing apparatus having: a storing means for storing information on a content to be provided; an information request reception means for receiving a request from a user for provision of the stored information on the content to be provided; and a user web page providing means for establishing an exclusive web page for each user and setting the exclusive web page to a condition permitting viewing the information requested by the user through the information request reception means;
a first user apparatus for requesting to the information providing apparatus, provision of the information on the content to be provided;
a second user apparatus for accessing the exclusive web page established in the information providing apparatus and viewing the information on the content to be provided; and
an information provider apparatus for providing to the information providing apparatus information on a designated content to be provided.

There is also provided, according to a further preferred embodiment of the present invention, an information providing apparatus having: a storing means for storing information on a content to be provided; an information request reception means for receiving a request from a user for provision of the stored information on such content to be provided; and a user web page providing means for establishing an exclusive web page for each user and setting the exclusive web page to a condition permitting viewing said requested information.

As described above, according to the preferred embodiments of present invention, it is possible to provide an information providing method and system, and an information providing apparatus, respectively enabling a user to receive only desired information on a desired form through simple operation, and yet, enabling the information provider to properly provide the user interested in the information on advertised goods or services with information on said goods or services without causing the interested user to miss an accessing opportunity, whereby enabling the information provider to more efficiently provide the user(s) with proper information related to the goods and services of his / her (their) interest.

### BRIEF DESCRIPTION OF THE DRAWINGS

The above and other objects, features and advantages of the present invention will become more apparent from the following description of the presently preferred exemplary embodiments of the invention taken in conjunction with the accompanying drawings, in which:
FIG. 1 shows a basic construction of the information providing system according to a preferred embodiment of the present invention;
FIG. 2 shows a schematic block diagram of a hardware construction of an information providing system according to a first preferred embodiment of the present invention;
FIG. 3 shows a schematic block diagram of an information providing system according to the first preferred embodiment of the present invention shown in FIG. 2 from a viewpoint of logical functions provided by the inventive system;
FIG. 4 shows a diagram for exemplifying the contents of a customer table (list) of data base of the service provider apparatus provided for the information providing system shown in FIG. 3, according to the first preferred embodiment of the present invention;
FIG. 5 shows a diagram for exemplifying a contents table of the data base of the service provider apparatus provided for the information providing system shown in FIG. 3, according to the first preferred embodiment of the present invention;
FIG. 6 shows a diagram for exemplifying the contents of an order table of the data base of the service provider apparatus provided for the information providing system shown in FIG. 3, according to the first preferred embodiment of the present invention;
FIG. 7 shows a diagram for exemplifying the contents of a collection table of the data base of the service provider apparatus provided for the information providing system shown in FIG. 3, according to the first preferred embodiment of the present invention;
FIG. 8 shows a diagram for exemplifying the contents of a bulletin-board table of the data base of the service provider apparatus provided for the information providing system shown in FIG. 3, according to the first preferred embodiment of the present invention;
FIG. 9 shows a diagram for exemplifying the relationship between individual tables of the data bases shown in FIG. 4 to FIG. 8, according to the first preferred embodiment of the present invention;
FIG. 10 (A) and FIG. 10 (B) exemplify an actual advertisement medium for advertising desired goods and services, according to a preferred embodiment of the present invention;
FIG. 11 shows a first diagram describing a process of collecting information desired by a user via E-mail, according to a preferred embodiment of the present invention;
FIG. 12 shows a second diagram describing a process of collecting information desired by a user via E-mail, according to a preferred embodiment of the present invention;
FIG. 13 shows a third diagram describing a process of collecting information desired by a user via E-mail, according to a preferred embodiment of the present invention;
FIG. 14 shows a display screen exemplifying a registered data catalog home page 4 for displaying various goods and services constituting the objects of available information, according to a preferred embodiment of the present invention;
FIG. 15 shows a display screen for exemplifying composition of a user's collection page, in which first information on goods and services is displayed, according to a preferred embodiment of the present invention;
FIG. 16 shows a display screen for exemplifying a bulletin board pagedisplayed when the bulletin-board link button of the user's collection page shown in FIG. 15 is displayed, according to a preferred embodiment of the present invention;
FIG. 17 (A) and FIG. 17(B) show a page for displaying information on related goods and services, which are shown whenever selecting the related goods and services display button of the user's collection page shown in FIG. 15, according to a preferred embodiment of the present invention;
FIG. 18 shows a display screen for exemplifying a condition in which two kinds of information on the goods and services are displayed on the user's collection page, according to a preferred embodiment of the present invention;
FIG. 19 shows a display screen for exemplifying a condition in which three kinds of information on the goods and services are displayed on the user's collection page, according to a preferred embodiment of the present invention;
FIG. 20 shows a display screen for exemplifying composition of an user information settings page for enabling a user to register and renew his specific information, according to a preferred embodiment of the present invention;
FIG. 21 shows a display screen for exemplifying a management page of the information provider apparatus delivered from the service provider apparatus, according to a preferred embodiment of the present invention;
FIG. 22 shows a display screen for exemplifying a page for renewing registered information and communicating with a user in the information provider apparatus available according to a preferred embodiment of the present invention;
FIG. 23 shows a display screen for exemplifying a page for confirming an actual condition of utilizing information registered in the information provider apparatus, according to a preferred embodiment of the present invention;
FIG. 24 shows a display screen for exemplifying a page in the information provider apparatus for confirming message transmitted from users against information on the goods and services delivered from an information provider according to a preferred embodiment of the present invention;
FIG. 25 shows a display screen for exemplifying a page in the information provider apparatus for displaying a list of users who utilized information on the goods and services, according to a preferred embodiment of the present invention;
FIG. 26 shows a display screen for exemplifying a page in the information provider apparatus for displaying information collected by users, according to a preferred embodiment of the present invention;
FIG. 27 shows a first diagram describing a summarized flow of an information providing service utilizing an information providing system, according to a preferred embodiment of the present invention;
FIG. 28 shows a second diagram describing a summarized flow of an information providing service utilizing the information providing system, according to a preferred embodiment of the present invention; and
FIG. 29 shows a third diagram describing a summarized flow of an information providing service utilizing the information providing system, according to a preferred embodiment of the present invention.

### DESCRIPTION OF THE PREFERRED EMBODIMENTS

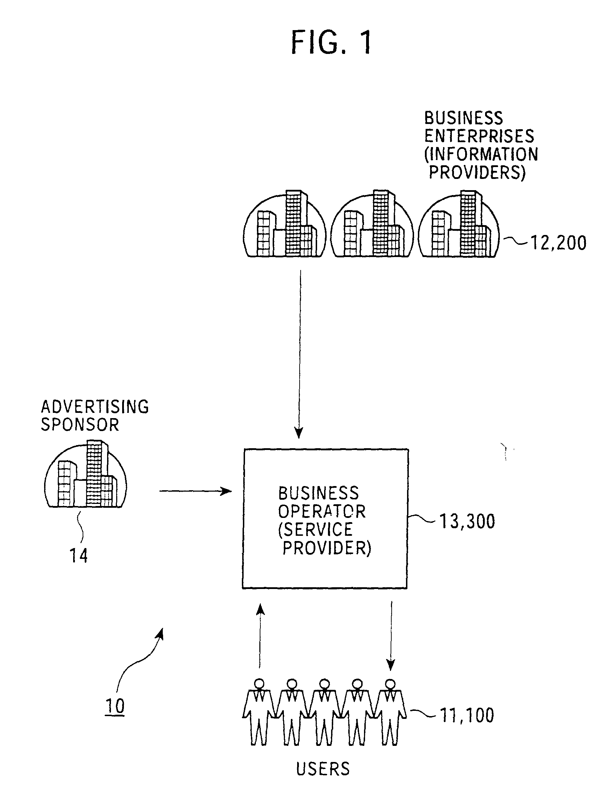

Referring now to FIG. 1 to FIG. 29, the information providing system according to a preferred embodiment of the present invention is described below.

First, referring to FIG. 1, a summarized construction of an information providing system according to the present invention is described below.

The information providing system 10 receives a wide variety of information via a communication network in a form capable of offering high convenience for users and enabling information providers to efficiently transmit a wide variety of information as well. A wide variety of information to be delivered by the information provider includes such arbitrary information including the one available for advertising a variety of goods and services, for example.

FIG. 1 exemplifies a basic construction of an information providing system 10 according to a preferred embodiment of the present invention.

Conventionally, an information provider 12 including a business enterprise engaged in advertising business directly delivers specific information via a variety of media against individual users or customers 11 who request the advertising enterprise for delivery of specific information and in return receive the requested information. However, in the information providing system 10 according to the preferred embodiment of the present invention, a service provider 13 intervenes between the users 11 and an individual user11 to deliver the required information to the user 11 in a proper form after properly arranging the required information. Also, the service provider 13 notifies the information provider 12 of a condition or condition of delivery of information.

In addition, an actual transmission of information and signal processing are executed between a customer terminal apparatus 100, an information provider apparatus 200, and a service provider apparatus 300, which respectively correspond to the individual users 11, information providers 12, and the service providers 13 via a communication network service line.

In addition, like a variety of communication service systems, in the information providing system 10 according to the preferred embodiment of the present invention, there may be a case in which an advertisement presented by an advertising sponsor 14 may be added to transmitted mails or information or to a web page itself in the form of a "banner" advertisement. A process to add an advertisement to the transmitted mails or information undertaken by an advertising sponsor 14 is omitted from the following description.

A method for efficiently transmitting desired information by applying the information providing system 10 according to a preferred embodiment of the present invention is summarized below.

First, as a basic characteristics, the information providing system 10 according to the preferred embodiment of the present invention initially establishes (i.e., sets up) a home page exclusively available for an individual user 11 in the service provider apparatus 300, and then collects information required by users 11 or interesting information.

Because of the above arrangement, individual information providers 12 comprising a business enterprise previously register individual target information available for provision to the service provider apparatus 300 and then establishes (sets up) an E-mail (electronic mail) address in each web page. In this case, a domain name indicates the service provider apparatus 300, in which addresses are set, where user's name are indicated in correspondence with individual information.

Next, the service provider apparatus 300 notifies users of URL or E-mail address of the corresponding web page by applying any means by attaching a URL or E-mail address to actual advertising media as TV commercial advertisement video and message or posters related to information on specific goods or services, for example.

In the event if a certain user 11 is interested in the information of a certain actual advertising medium, the user 11 then transmits E-mail to a specific mail address attached to the advertisement of the related goods.

Then, the service provider apparatus 300 in receipt of the E-mail from the user 11 identifies the transmitter (the user 11) and the target information, and then provides the user 11 with his specific home page.

Then, by linking registered information with the specific home page exclusive to this user 11, the service provider apparatus 300 delivers the required information to the user 11.

In this case, the service provider apparatus 300 properly mediates communication between the user 11 and the information provider 12, or links the user 11 with an on-line shopping service line, or introduces related goods. Further, the service provider apparatus 300 provides a community space so as to enable users who collected identical information to, for example, exchange ideas with each other. Further, the service provider apparatus 300 provides users with such home pages for designating an overall list of registered information. By enabling individual users 11 to select information found to be more interesting than the provided home pages, the service provider apparatus 300 further provides an environment for enabling users 11 to collect information of interest as in the case of collecting such information of interest via E-mail.

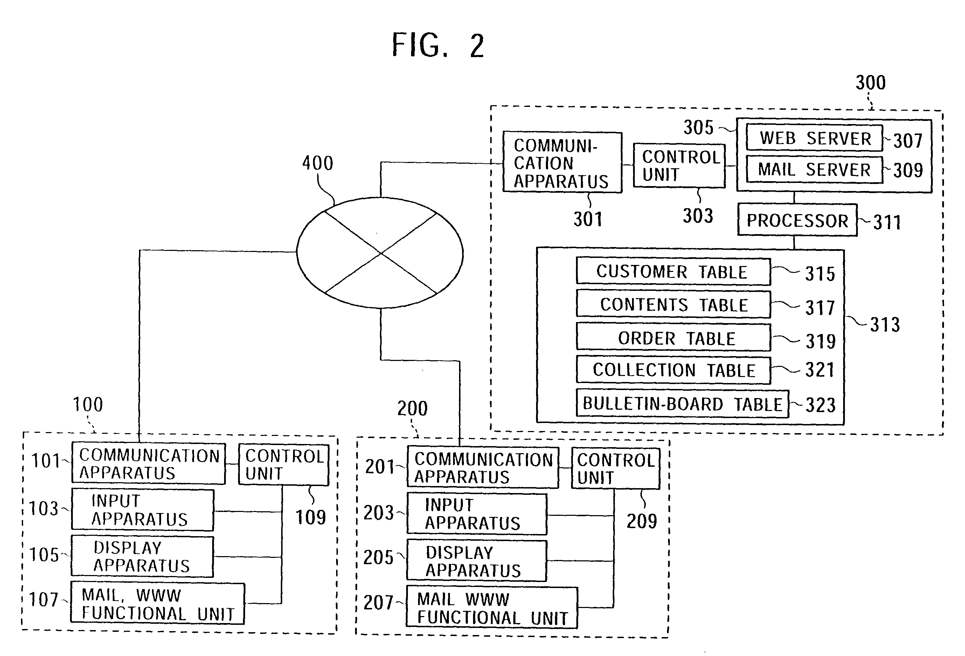

Next, referring to FIG. 2 to FIG. 9, practical construction of the information providing system 10 according to the preferred embodiment of the present invention is described below.

FIG. 2 shows a first schematic block diagram of the information providing system 10 according to a preferred embodiment of the present invention, from a point of view of hardware construction.

As shown in FIG. 2, the information providing system 10 according to the preferred embodiment of the present invention comprises a customer terminal apparatus 100, an information providing apparatus 200, a service provider apparatus 300, and a communication network service line 400.

The customer terminal apparatus 100 inputs and outputs information in order to enable users 11 to executes various functions including generation of a request for delivery of information desired by users to be acquainted, viewing of information being provided, and utilization of other services as taking memorandum against information and communication with other users, or the like.

As shown in FIG. 2, the standard customer terminal apparatus 100 comprises a communication apparatus 101, an input apparatus 103, a display apparatus 105, a mail-WWW functional unit 107, and a controlling unit 109.

By communicating with the service provider apparatus 300 via the communication network service line 400, the communication apparatus 101 transmits a request for delivery of information desired by users and may also receive the requested information.

The input apparatus 103 enables an operator of the customer terminal apparatus 100 to input data for designating information which the operator has been desired to receive.

The display apparatus 105 externally displays data transmitted via the communication network service line 400 to the operator of the customer terminal apparatus 100.

The mail-WWW functional unit 107 constitutes a higher level communication environment for executing a process including transmission of data for designating desired information delivered to the input apparatus 103 from the communication apparatus 101 to the service provider apparatus 300 via E-mail and another process for accessing a WWW (World Wide Web) provided by the service provider apparatus 300 in order to view desired information. The mail-WWW functional unit 107 constitutes an environment formed on the hardware structure as the communication apparatus 101, input apparatus 103, and the display apparatus 105 by means of software program executed by the controlling unit 109.

In order to properly operate all the components of the customer terminal apparatus 100 and properly execute transmission and reception of related information, the controlling unit 109 controls operation of all the components of the customer terminal apparatus 100.

In order to constitute the customer terminal apparatus 100, in actual cases, those communication processing apparatuses as a portable phone, a PHS, a PDA, a personal computer or the like are properly utilized.

It has to be noted that, as it will be described later, an operation performed by the customer terminal apparatus 100 to indicate desired information and an operation to actually receive the desired information may not necessarily be executed in sequence. in other words, there may be a case in which desired information is previously indicated before eventually viewing details of the desired information. As a result, in a customer terminal apparatus 100 restricting the form of use, it is allowable to introduce a construction compatible with the restricted form of use, and thus, it is not always necessary to fully constitute the standard construction as shown in FIG. 2.

For example, in a case of designating desired information via E-mail, a in practice usable customer terminal apparatus 100 may include a portable phone set or a PHS unit which is devoid of such a function for allowing full view of the WWW, but actually having only a limited functional capability of transmitting electronic mail.

The information provider apparatus 200 executes a wide variety of processes including the following: delivery and renewal of information related to such goods and services to be delivered to a contents table 317 of a data base 313 of the service provider apparatus 300 executed by a business operator providing goods and services who concurrently perform advertising activities thereof, reception of user's information accessed from the service provider apparatus 300, or marketing promotion against users who have had access via a collection page or E-mail.

As shown in FIG. 2. a standard information provider apparatus 200 comprises a communication apparatus 201, an input apparatus 203, a display apparatus 205, a mail-WWW functional unit 207, and a controlling unit 209.

The communication apparatus 201 communicates with the service provider apparatus 300 via a communication network service line 400, whereby registering information to be subject to delivery and the term of delivery and also receiving user's information. In addition, the communication apparatus 201 communicates with the customer terminal apparatus 100 owned by such user interested in the information delivered by the information provider apparatus 200 via the communication network service line 400.

The input apparatus 203 enables an operator of the customer provider apparatus 200 to input the above information subject to delivery and the term of delivery or input information to be transmitted to the customer terminal apparatus 100.

The display apparatus 205 displays as an output information transmitted from the service provider apparatus 300 or the customer terminal apparatus 100 via the communication network service line 400 to the operator of the information provider apparatus 200.

The mail-WWW functional unit 207 constitutes a higher level communication environment, which executes such processes including transmission of information received by the input apparatus 203 and another process for displaying information transmitted from the service provider apparatus 300 and received by the communication apparatus 201 on the display apparatus 205 based on a predetermined format. The mail-WWW functional unit 207 constitutes an environment formed on the hardware structure as the communication apparatus 201, input apparatus 203, and the display apparatus 205 by means of a software program executed by the controlling unit 209.

In order to properly operate all the components of the information provider apparatus 200 and also properly transmit and receive all the related information, the controlling unit 209 controls operation of all the components of the information provider apparatus 200.

In order to constitute the information provider apparatus 200, usually, a general-purpose data processing apparatus such as a personal computer or a work-station is conveniently utilized.

However, as it will be described later, independently of an operation of inputting and transmitting detailed information available for provision, the information provider apparatus 200 also executes an operation with less load as in the case of receiving a specific data from the service provider apparatus 300 or an E-mail message from the customer terminal apparatus 100. When utilizing the information provider apparatus 200 by limiting to a relatively low requirement operation, it is also allowable to utilize a portable phone set, a PHS unit, or a variety of PDA apparatuses that may serve as the information provider apparatus 200.

In other words, it is not always necessary to constitute the information provider apparatus 200 by fully accommodating standard components as shown in FIG. 2.

The service provider apparatus 300 itself includes a server apparatus which mediates information, processes the information into a desired form, and then delivers it in order to provide to such users interested in the goods and services provided by the information provider apparatus 200 with information related to those goods and services.

As shown in FIG. 2, the service provider apparatus 300 comprises the following: a communication apparatus 301, a controlling unit 303, a communication server 305, a processor 311, and a data base 313. The communication server 305 comprises a web server 307 and a mail server 309. The data base 313 comprises a customer table 315, a contents table 317, an order table 319, a collection table 321, and a bulletin-board table 323.

The communication apparatus 301 communicates with the customer terminal apparatus 100 and the information provider apparatus 200 via the communication network service line 400, through which the communication apparatus 301 receives target information from the information provider apparatus 200, and yet, it also receives information on the goods and service of interest by users from the customer terminal apparatus 100. Further, the communication apparatus 301 transmits and receives a variety of information related to the record of accessing user's specific home pages to and from the customer terminal apparatus 100, and yet, it also transmits information on the record of user's access to the information provider apparatus 200.

Based on the kinds and the contents of information received by the communication apparatus 301, the controlling unit 303 outputs the received information to the web server 307 or the mail server 309 of the communication server 305.

The web server 307 of the communication server 305 provides individual home page environments per user. The web server 307 stores information on the goods and services specified by users delivered from the information provider apparatus 200. When being accessed by any user, the web server 307 delivers accumulated information to the customer terminal apparatus 100 via user's specific home page.

On the other hand, availing of the function of E-mail, the mail server 309 of the communication server 305 provides an E-mail for designating goods and services of interest transmitted from the customer terminal apparatus 100. The communication server 305 also provides a chatting environment between individual users interested in the same goods and services via the customer terminal apparatus 100. Further, the mail server 309 also provides an environment to effectuate transmission and reception of information between the customer terminal apparatus 100 and the information provider apparatus 200.

Based on the instruction from the communication server 305, the processor 311 accesses the data base 313 to read out desired information, and then outputs the read-out information to the communication server 305. In addition, the processor 311 stores information received from the communication server 305 in the data base 313.

The data base 313 stores a variety of information including information inputted from the information provider apparatus 200 to be delivered to the customer terminal apparatus 100 or information to be delivered to the information provider apparatus 200 based on the access from the customer terminal apparatus 100.

As described earlier, the data base 313 comprises the following: a customer table 315 which stores attributes of individual customers; a contents table 317 which stores data corresponding to individual addresses; an order table 319 which stores service utilization log of individual users; a collection table 321 which stores collection data of individual users; and a bulletin-board table 323 which stores various articles written on a bulletin board. Further details of these tables will be described later on.

The communication network service line 400 is arbitrarily available in the form of Internet in the present embodiment, where the communication network 400 enables mutual communication between the above-referred customer terminal apparatus 100, the information provider apparatus 200, and the service provider apparatus 300, in connection with each other.

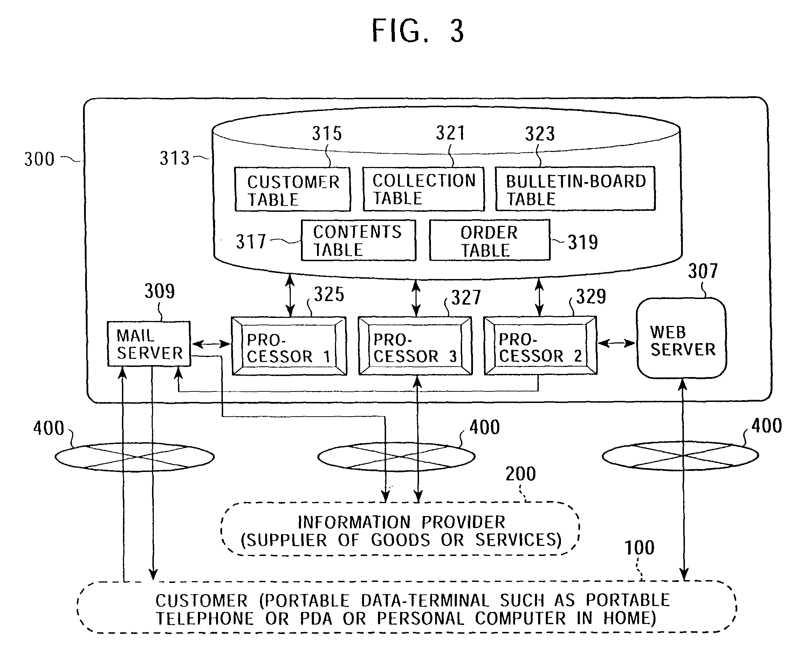

Referring now to FIG. 3, construction of the information providing system 100 is described below from a logical functional viewpoint.

As described earlier, the above customer terminal apparatus 100 and the information provider apparatus 200 individually include a portable phone set, a PHS unit, a PDA unit, or a personal computer individually incorporating a normal E-mail exchanging function and WWW viewing function as well Accordingly, in order to more fully describe a functional and logical operation of the above customer terminal apparatus 100 and the information provider apparatus 200, these operations can be better understood by describing mainly with reference to the drawings. Further logical construction and operating characteristics of the customer terminal apparatus 100 and the information provider apparatus 200 will be described later.

As shown in FIG. 3, logically, the service provider apparatus 300 includes the following: a web server 307, a mail server 309, a data base 313, a first processor 325, a second processor 327, and a third processor 329.

The web server 307 corresponds to a home page exclusively available for an individual user who is entitled to view the registered information as an overview. The web server 307 is prepared as a configuration of two systems for each user, including a conventional personal computer having an ornamental page like picture image and another system including a portable text based portable terminal unit.

The mail server 309 receives E-mail message from the customer terminal apparatus 100 and conversely distributes E-mail message inputted from the first and second processors 325 and 327. The return mail includes a properly summarized information and URL of the user's exclusive or specific home page.

The data base 313 records a wide variety of data and information required for the service provider apparatus 300 to provide users with various information including the data on the attributes of individual users 11 and individual information providers 12, information provided by individual information providers 12, and actual condition of access to the provided information, for example.

The data base 313 comprises a customer table 315, a contents table 317, an order table 319, a collection table 321, and a bulletin board table 323.

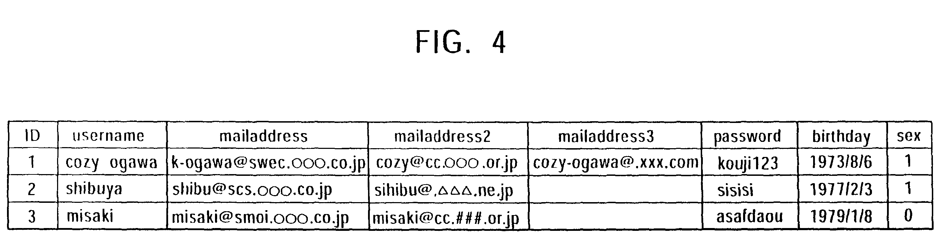

Referring now to FIG. 4 to FIG. 8, contents of the above-referred tables are described below.

FIG. 4 to FIG. 8 respectively exemplify practical contents of the above referred customer table 315, contents table 317, order table 319, collection table 321, and the bulletin-board table 323.

As shown in FIG. 4, the customer table 315 stores basic attributes of individual users registered by individual users including the following; user's identification ID code (ID), user's name (username), mail address (mailaddress), password (password), birth date (birthday), and sex (sex), for example. In this case, it is possible to register a plurality of mail addresses in addition, as a second mail address (mailaddress2) and third mail address (mailaddress3), for example.

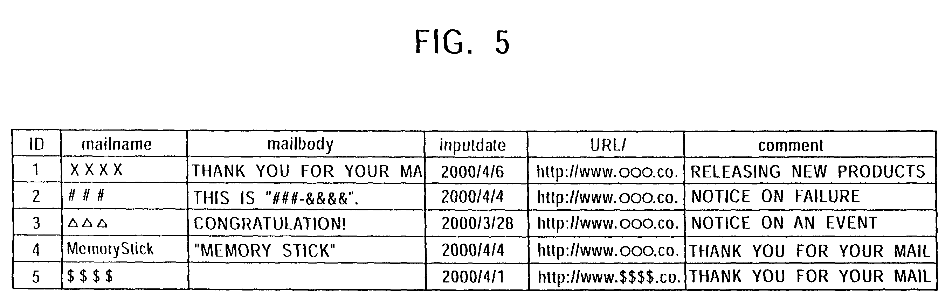

As shown in FIG. 5, the contents table 317 stores the following: data identification ID against a specific address (mailname) put to actual advertisements by the information provider, information ID (ID) return mails (mail body) automatically returned to such users who are interested in the corresponding advertisements and transmitted E-mails, information input date (inputdate), an URL containing detailed information (URL), a comment addressed to a corresponding user via the URL (comment) and/or the like.

An automatically returnable message contains a simple message and simple information on the corresponding goods and services.

In addition, a URL containing detailed information corresponds to a page for introducing goods of the information provider. In other words, the URL serves for introducing the corresponding goods and services to users via a collection page when users collect the goods and services into his mail address, i.e., into his a specific home page. Also, a comment addressed to a user indicates such contents informing the user of the goods and services introduced via the URL of the collection page.

It has to be noted that, inasmuch as the domain names of respective addresses correspond to the domain names of the service provider apparatus 300, the mail address exemplified in FIG. 5 merely indicates a portion that comes before an "@" symbol.

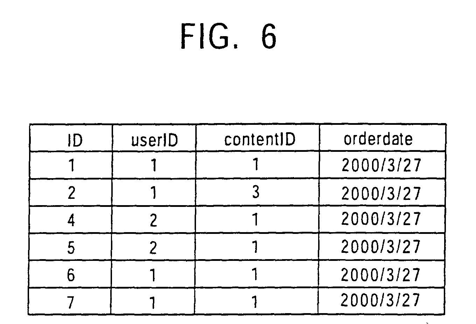

As shown in FIG. 6, the order table 319 stores information which distinguishes the user identification (userID), contents of information desired by users (contentID), and the date of the order placed by the user (orderdate). The order table 319 stores a service utilization log per user in correspondence with an individual order ID.

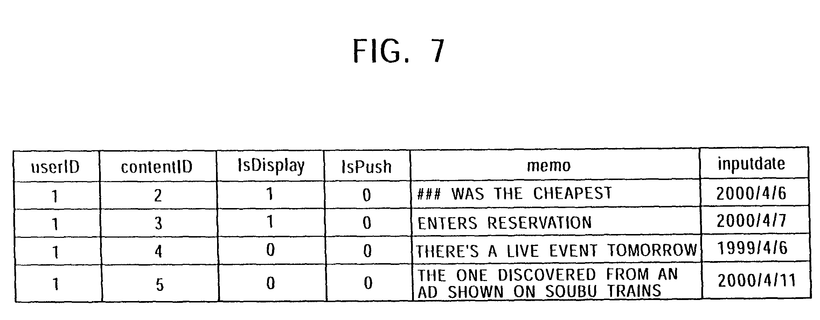

As shown in FIG. 7, the collection table 321 stores collection data per user. In practice, the collection table 321 stores display condition of information in the collection page per user (indicated as "IsDisplay") against the combination of the user's identification code (userID) and the information (ContentID), setting of user's desire for distribution of specific information against renewal of information (IsPush), a memo written by an individual user (memo), and a date of renewal of information (inputdate).

The above-referred display condition (IsDisplay) of information in the user's collection page corresponds to a flag which indicates whether the corresponding information is withheld from being displayed or not in the collection page, where the flag is set by an individual user in the collection page.

Setting of user's desire for distribution of specific information against renewal of information (IsPush) corresponds to a flag which indicates whether the corresponding user desires distribution of the renewed information or not, where the flag is set by an individual user in thecollection page.

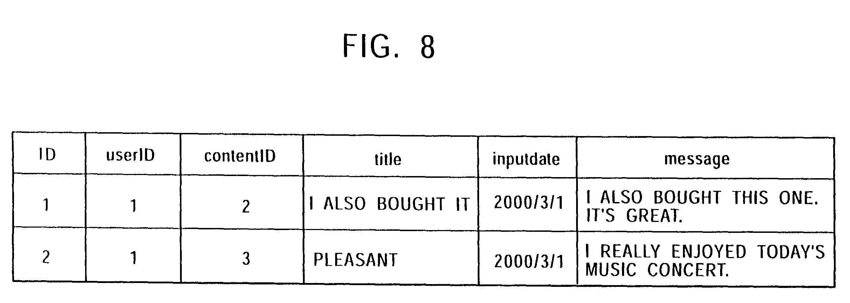

As shown in FIG. 8, the bulletin-board table 323 stores articles written in an individual bulletin-board. In practice, the written articles are stored in correspondence with a writing event ID (ID), a user's identification (userID), identification of target information (contentID), title of the written article (title), the date of writing the target information (inputdate), and the written contents (Message).

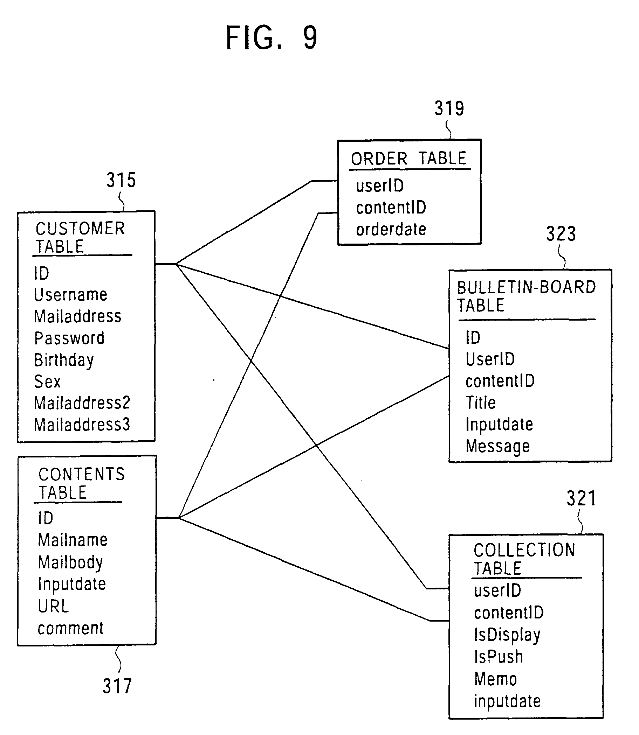

FIG. 9 schematically exemplifies relationships between each of the above-referred tables of the data base 313.

As shown in FIG. 9, basic information related to customers is registered in the customer table 315, whereas basic information related to contents is registered in the contents table 317. Whenever an event occurs in regard to a request from a customer for delivery of specific information or in terms of collecting desired information into user's specific home page or in terms of the act of writing required information into the bulletin board, every information designating the occurred event is recorded into the corresponding order table 319, the collection table 321, and the bulletin board table 323. As a result, as shown in FIG. 9, every event (item) recorded in the order table 319, the collection table 321, and the bulletin-board table 323, necessarily corresponds to the user's identification ID of the customer table 315 and the contents identification ID of the contents table 317.

Initially, the first processor 325 reads out a mail accompanied with address of an information of interest transmitted from the customer terminal apparatus 100 out from the mail server 309, and then identifies the title or name of the information under request and the customer requesting it. Next, the first processor 325 acquires the corresponding information from the contents table 317 of the data base 313, and then requests the mail server 309 to generate a return mail. Concurrently, the first processor 325 stores these log data in the order table 319.

Based on a result of authentication from a specific customer inputted from the web server 307, the second processor 327 extracts all the data corresponding to the authenticated customer, and then dynamically generates HTML. In addition, the second processor 327 processes memo function and communication function contained in each individual data.

The third processor 329 executes a process for authentication of the information provider apparatus 200, up-loading of information from the information provider apparatus 200 into collection pages of individual users, and renewal of the contents table 317 of the data base 313.

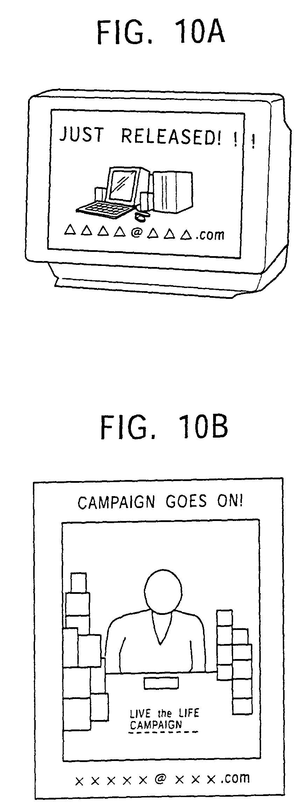

Referring next to FIG.10 to FIG. 19, a flow of the information providing operation and related processes mainly executed by the information providing system according to the present invention featuring the above construction is described below.

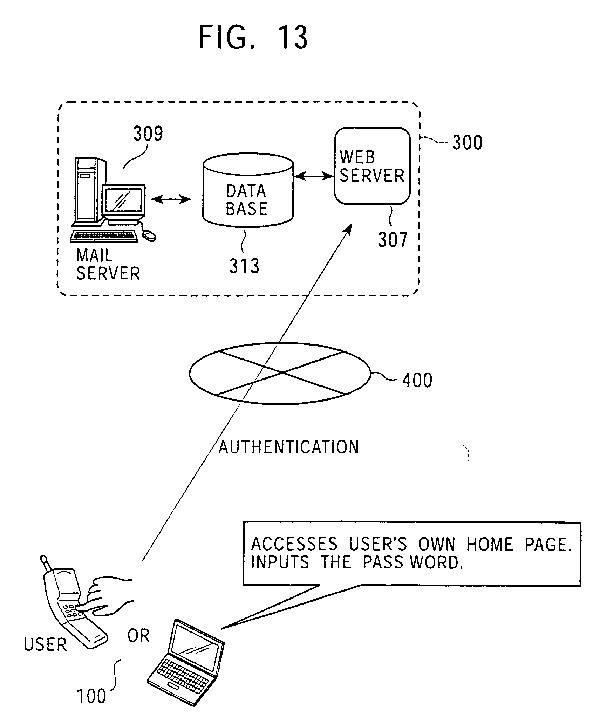

First, referring to FIG. 10 FIG. 13, the process executed by individual users for collecting desired information via E-mail is described below.

For example, as shown in FIG. 10 (A), those business operators who are engaged in the marketing of goods and services as well as those having announced marketing of novel products or the ones engaged in the sales campaign of specific goods and services promote the corresponding goods and services by means of advertisements on TV, or by means of posters as shown in FIG. 10 (B). fixed at locations like railway stations or the like. In this case, a mail address is assigned in the advertising medium so as to enable such users interested in the advertised object to access the corresponding business entities. A mail address enables the domain name to consequently indicate the service provider apparatus 300.

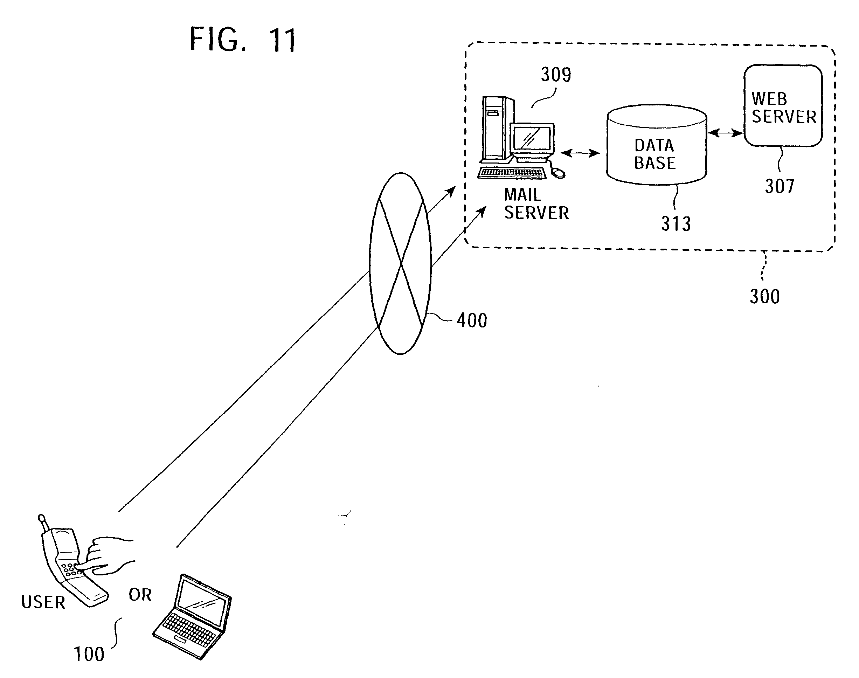

When a certain user is interested in specific goods or services after being affected by the advertisements, as shown in FIG. 11, he will transmit an inquiry mail to the address indicated in the advertising medium via the customer terminal apparatus 100 including a portable phone or a personal computer, for example. As a result, the mail transmitted from the customer terminal apparatus 100 is further transmitted to the service provider apparatus 300 via a communication network service line 400.

In response, the mail server 309 on the part of the service provider apparatus 300 receives the E-mail, and then distinguishes which one of the relevant information is desired by the user from the received mail, and then, further identifies the user's identification ID.

Next, the service provider apparatus 300 extracts a comment in return on the corresponding goods and services out from the contents table 317 of the data base 313 shown in FIG. 5.

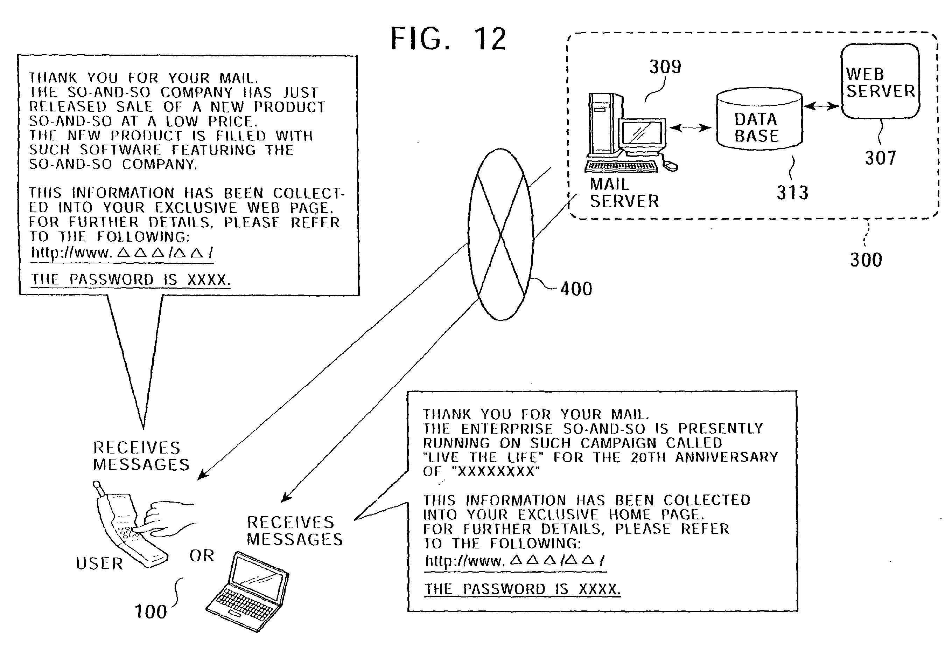

Next, as shown in FIG. 12, a returning (or replying) mail is prepared, including a comment by adding a message for indicating that the information on the corresponding goods and services has been collected into the home page of the corresponding user and also designating the URL of such home page, and yet, by adding a simple description and topics of the corresponding goods and services as required. Finally, the service provider apparatus 300 transmits the prepared message via the mail server 309 to the customer terminal apparatus 100, which is the transmitter of the inquiry mail.

In addition, in this case, if the corresponding user has utilized the present information providing service for the first time, the service provider apparatus 300 prepares a return mail by adding a specific password required to access the home page exclusively available for this user.

Moreover, after executing the above processes, by enabling the order table 319 and the collection table 321 of the data base 313 to store those events in regard to the request for information on the corresponding goods and services from the user, the service provider apparatus 300 renews the contents of the order table 319 and the collection table 321.

As shown in FIG. 13, upon receipt of the return mail, the user is enabled to access the designated URL from the customer terminal apparatus 100 as a personal computer or a PDA incorporating web viewing / accessing function.

On the other hand, by requesting delivery of a password, the service provider apparatus 300 authenticates the corresponding user.

If the authentication process turns out to be appropriate, the corresponding user is entitled to view the home page exclusively available for himself provided for by the web server 307, whereby the user is enabled to view the information on the goods and services requested by the user for provision via previously transmitted E-mail.

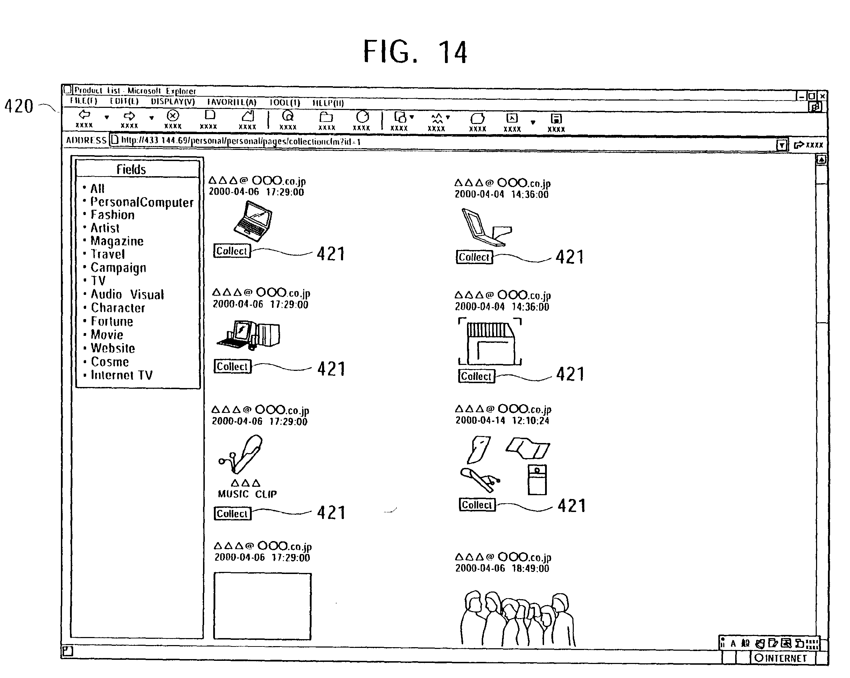

Next, referring to FIG. 14, a process to be executed by a user for collecting desired information from a home pages is described below.

The web server 307 of the service provider apparatus 300 incorporates a home page capable of viewing registered information at sight as shown in FIG. 14, which displays as an overview (or summary) such goods and services which are the target information for provision.

The registered information overview home page 420 is prepared by reading information registered in the contents table 317 of the data base 313. In this home page 420, a variety of objects for designating individual goods and services, mail addresses, and related data, are respectively displayed in correspondence with a plurality of collection buttons 421 available for collecting individual data into home pages of each user.

Accordingly, any user who has once utilized the service provider apparatus 300 and subsequently received an own home page and a specific password required for accessing the specific home page is allowed to access the above registered information overview home page 420 and collect the target information on the desired goods and services into his specific home page by pressing specific collection buttons corresponding to the desired good and/or service.

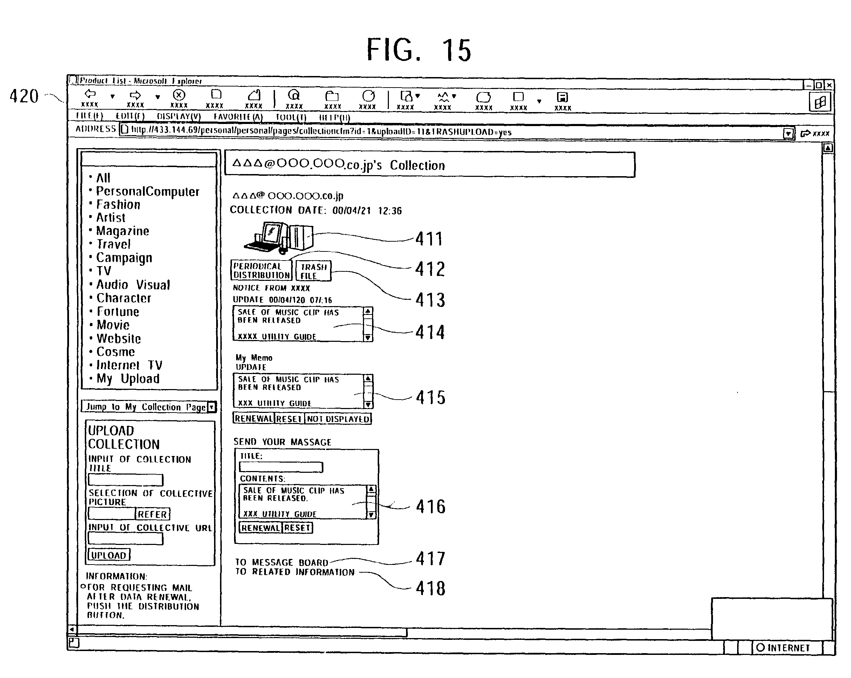

Next, referring to FIG. 15 to FIG. 19, the condition for displaying the collected information is described below.

FIG. 15 indicates composition of a collection page 410 exclusively available for an authenticated user, which exemplifies the condition in which data and information of the first goods and services are displayed.

The collection page 410 exclusively available for an authenticated user comprises a window picture which displays the data and information demanded by the user.

The above collection page 410 incorporates the following: an objective good 411, a periodical distribution button 412, a "trash" file button 413, a notifying window 414, a memo window 415, an opinion transmitting window 416, a bulletin-board linking object 417, and related goods display button 418.

The objective (or target) goods icon 411 comprises an image object for designating the goods and services collected into the user's specific home page. By clicking this icon, the user can access the detailed information page.

The periodical distribution button 412 comprises a button object required for proposing a periodical distribution service which notifies the user of every renewal of the contents table 317 provided for by the information provider apparatus 200 of the data base 313 via E-mail.

The "trash" file button 413 conveys the effect of collecting goods and services to the "trash" file page, in other words, discards the effect of collecting goods and/or services.

The notifying window 414 comprises a text window which displays a notice from the information provider apparatus 200 which provides information on the corresponding goods and/or services.

The memo window 415 comprises a text window in which the user of the collection page writes his specific memorandum.

The opinion transmitting window 416 is used for writing and transmitting user's opinion or remark to the information provider apparatus 200 which provides information on the corresponding goods and services. As shown in FIG. 15, the opinion transmitting window 416 incorporates such objective icons including a title-inputting window, another window for inputting user's opinion or remark, a transmitting button, and a reset button.

The bulletin-board linking object 417 comprises a button for linking to the bulletin-board page to which the corresponding user submits his specific opinion or remark on the information related to the proposed goods and services.

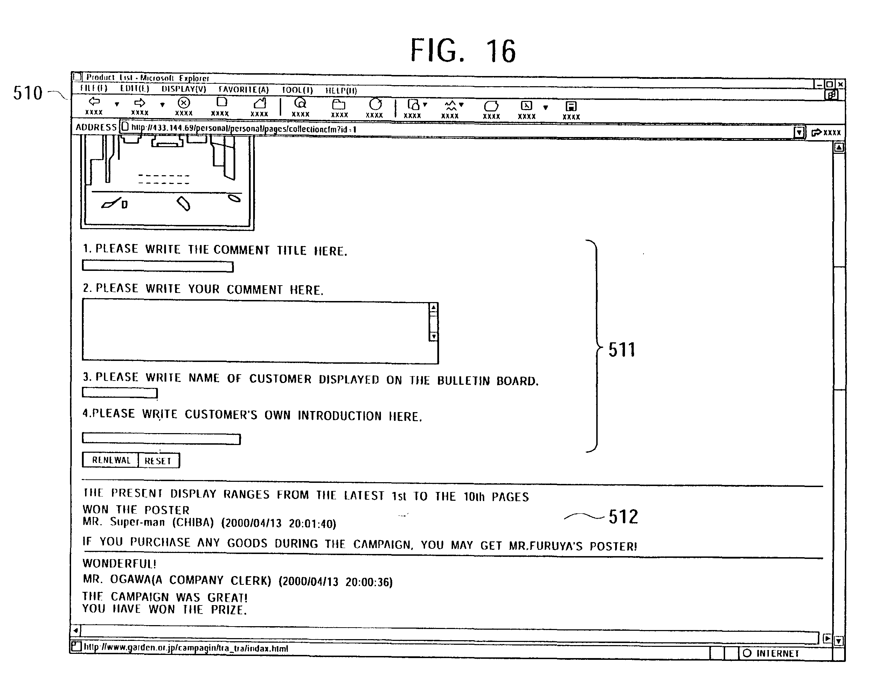

FIG. 16 exemplifies the contents of a bulletin-board page 510 which is subject to be displayed when the user has selected the bulletin board linking button 417.

As shown in FIG. 16, the bulletin-board page 510 comprises the title of a comment to be submitted thereto, an objective icon 511 for describing the contents of the comment and the name of the comment contributor. and another objective icon 512 for displaying the actually written form.

By submitting a desired comment availing of the bulletin-board page 510, the user can easily write his specific comment on the bulletin board.

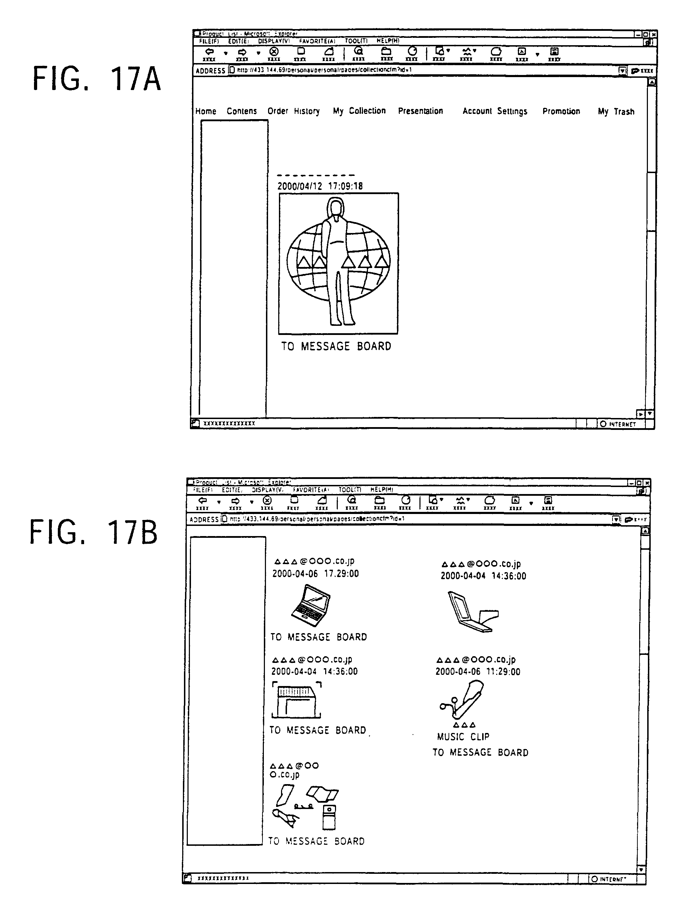

The related goods display button 418 displays such goods and services related to the objective (target) goods and services. FIG. 17 (A) and (B) give examples of display of information on the goods and services when the related goods display button is selected.

For example, when an authenticated user requests displaying of such goods and services related to the objective goods and services in response to information conducting a campaign for marketing specific goods and services, as shown in FIG. 17 (A) for example, information on a similar campaign is displayed. Likewise, when an authenticated user requests for displaying information on the goods and services related to the one described in information shown through a personal computer as shown in FIG. 17 (B) for example, a variety of information on the personal computers and peripheral apparatuses of similar series are displayed.

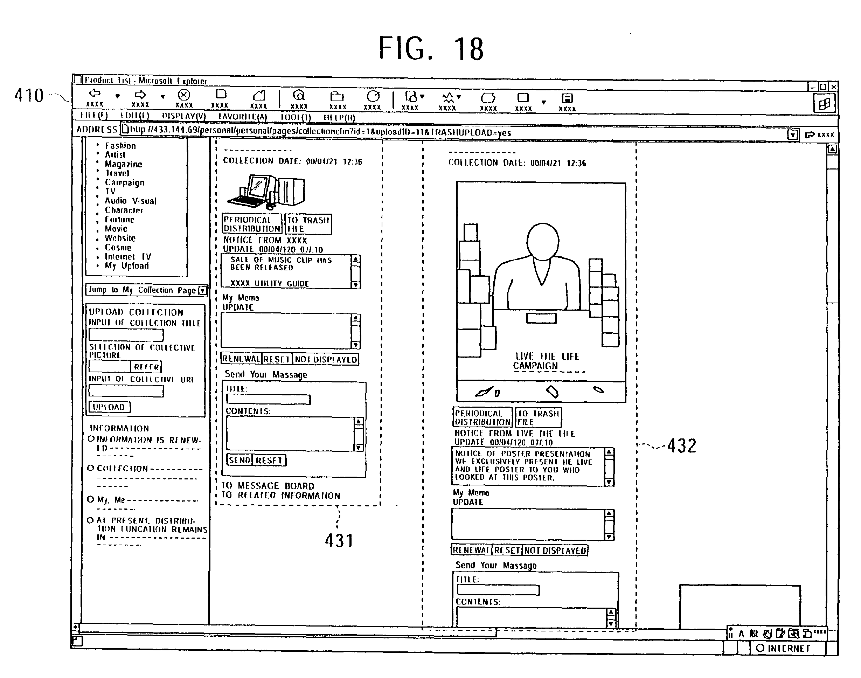

FIG. 18 shows a state in which an information on the first goods and services and another information on the second goods and services are jointly displayed on a collection page 410 exclusively available for an authenticated user.

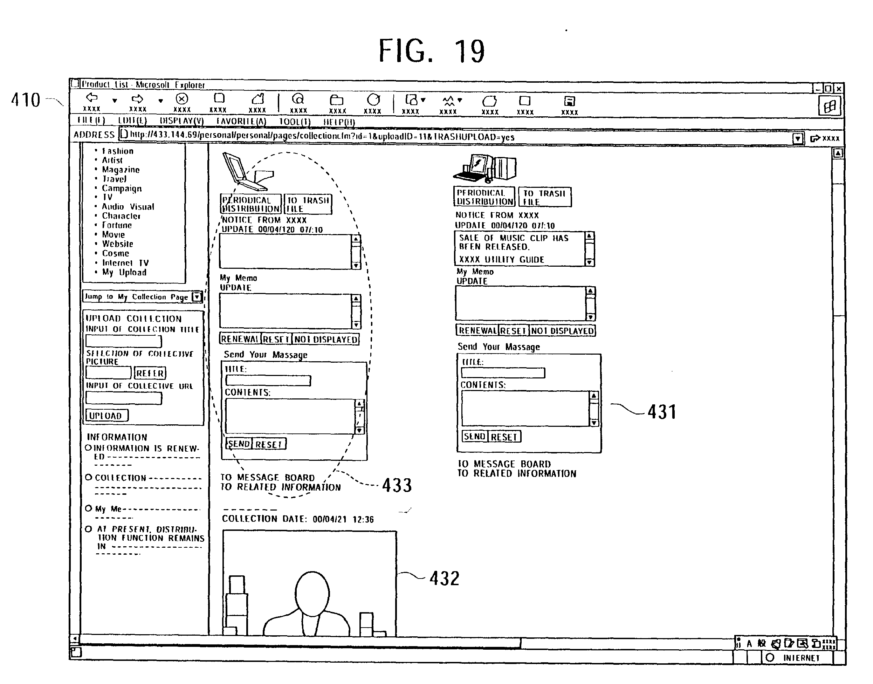

In addition, FIG. 19 shows a state in which three kinds of information are displayed on the user's exclusive collection page 410 including information 431 on the first goods and services, another information 432 on the second goods and services, and the other information 433 on the third goods and services.

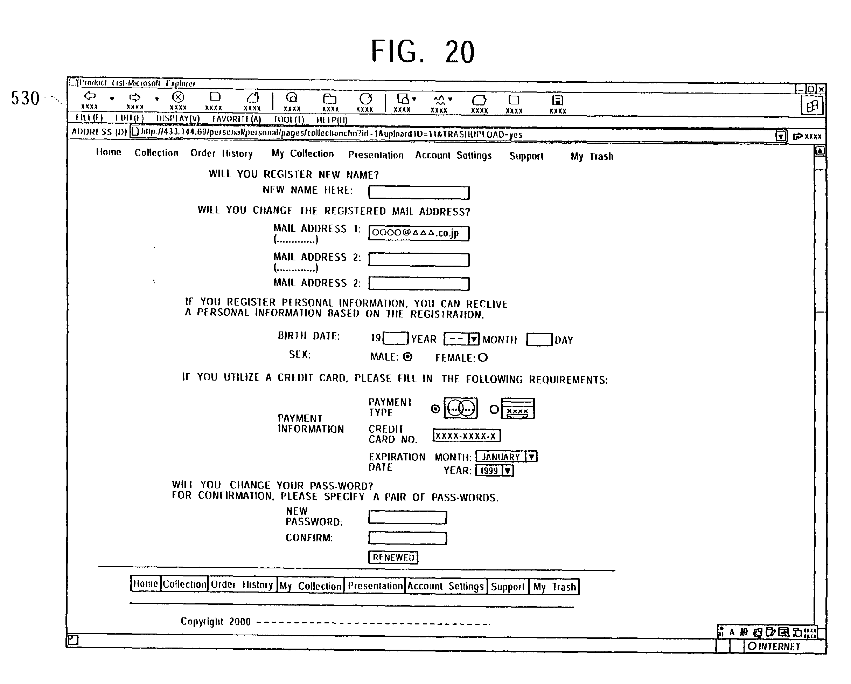

Next, referring to composition of an individual page, in other words, referring to processing environment related to those which are shown in FIG. 20 to FIG. 26, procedure for processing other utilities in the information providing system 10 according to the preferred embodiment of the present invention is described below.

First, such procedure to be executed by a user 11 for registering his specific information into the service provider apparatus 300 is described below.

FIG. 20 exemplifies composition of a user's information setting page 530 for registering and renewing user's specific information.

After initial registration of user's specific information into the service provider apparatus 300, every user 11 is allowed to properly register his specific information via the above user's information setting page 530.

In practice, each user 11 inputs one's own name, a plurality of E-mail addresses, date of birth, sex, data related to credit cards, his specific password, etc. into the service provider apparatus 300 via the user's information setting page 530.

By duly registering user's proper information into the service provider apparatus 300, the registered user is entitled to receive various information on the goods and services of interest conforming to user's specific attribute from the information provider 12 or the advertising sponsor 14 shown in FIG. 1 whenever required.

In addition, by arranging an environment for settling accounts by means of a credit card, when a transaction has been achieved via negotiation with the above information provider 12, the user is entitled to settling the account via the service provider apparatus 300, and yet, he is also entitled to engage in the actual marketing campaign for the goods and services of interest in the entire information providing system 10.

Next, an environment to be provided for by the service provider apparatus 300 against the information provider 12 is described below.

Based on the environment provided for by the service provider apparatus 300, the information provider apparatus 200 renews the registered information, communicates with authenticated users 11, and grasps actual condition (or status) of use.

Next, by referring to the web page to be provided, each environment subject to be provided are described below.

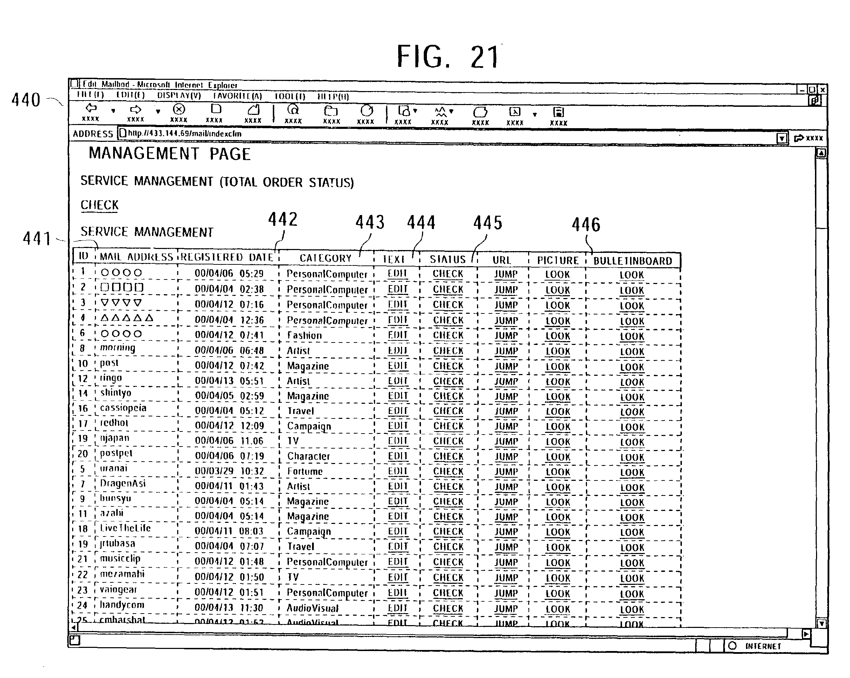

FIG. 21 exemplifies a management page 440 stored in the information provider apparatus 200 to be provided by the service provider apparatus 300.

As shown in FIG. 21, the management page 440 shows an overview / list / summary of a variety of information including the following: registered mail addresses 441 corresponding to various goods and services provided by the service provider apparatus 300; date of registration 442; service categories 443; information 444 on the link with user's specific communication page; and information 446 on the link with a page for reading message from the registered users.

By selecting desired items from the management page 440, an information provider is enabled to confirm actual condition of use in response to such services related to the desired goods, read message from the registered users, and communicate with them.

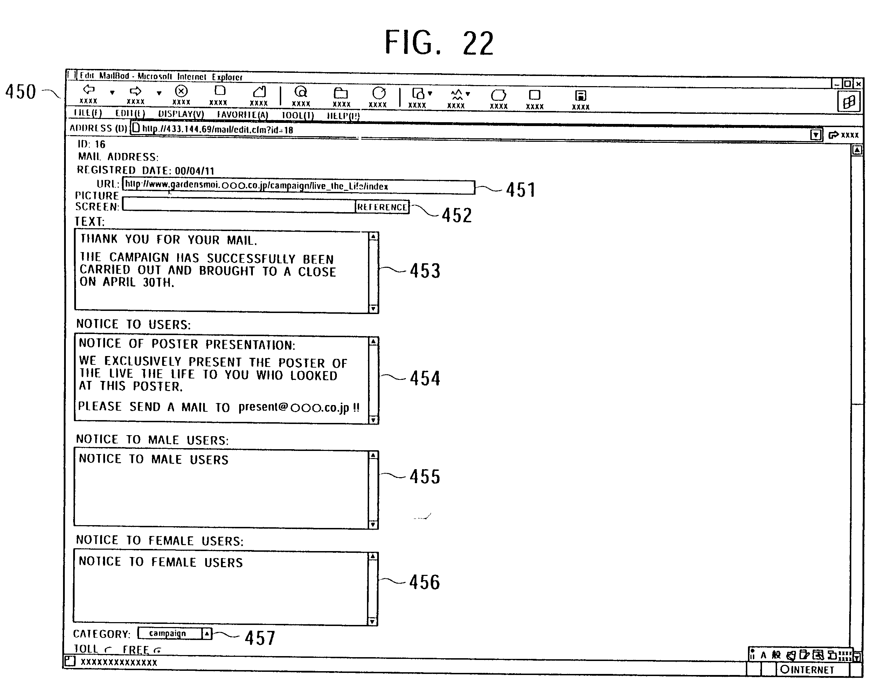

For example, when an information provider selects a link information 444 to a page for communicating with a registered user in regard to any of the goods and services shown in the management page 440, because of the function of the web server 307 of the service provider apparatus 300, a page 450 required for editing and communicating the registered information and communicating with the registered user is displayed on the information provider apparatus 200 as shown for example in FIG. 22.

The above page 450 comprises the following: a display window 451 for displaying URL of the registered information home page; a window 452 for up-loading picture image displayed when a user has collected specific information: a window 453 for describing contents of a mail to be returned automatically upon receipt of the mail; a window 454 for describing contents of "notice from a business enterprise" shown on user's collection page; a pair of windows 455 and 456 for notifying specific users of a specific notice; and a selecting window 457 for selecting category of information.

When the information provider on the part of the information provider apparatus 200 describes the desired contents in the above windows or changes the contents described in those windows, the information provider is enabled to input or renew the contents of information to be provided for the customer terminal apparatus 100 via the service provider apparatus 300.

Further, when the information provider selects the above referred link information 445 to the page for confirming the condition of use contained in the management page 440, as a result of the function of the web server 307 of the service provider apparatus 300, a page 460 for confirming the condition of utilization of the registered information is displayed.

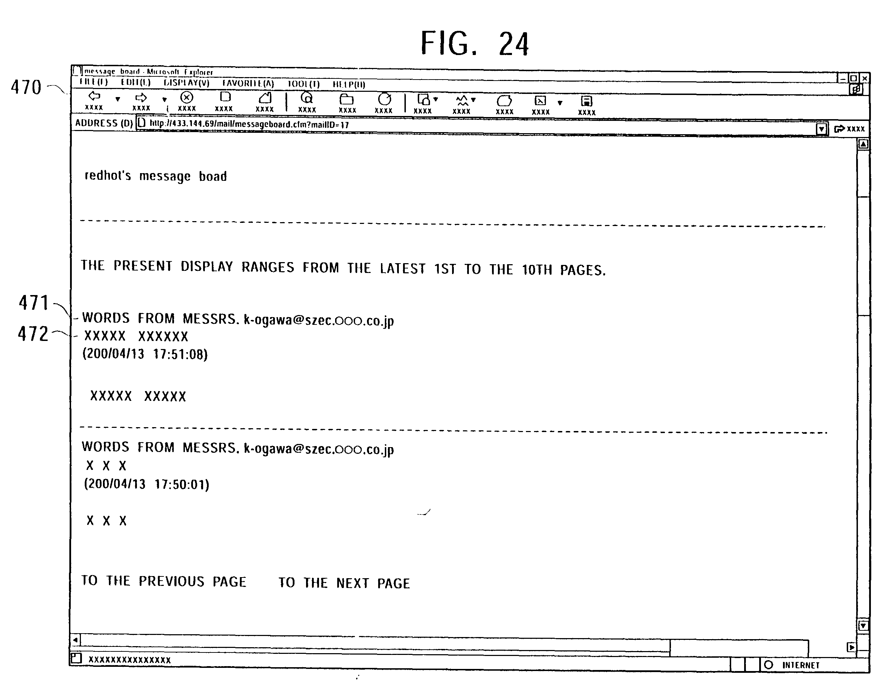

In addition, when the information provider selects the above referred link information 446 on the link to the page for reading a message from the registered user contained in the management page 440, as a result of the function of the web server 307 of the service provider apparatus 300, a page 470 for confirming message from the registered user interested in the goods and services provided for by the information provider is displayed as shown, for example, in FIG. 24.

The above-referred page 470 displays a user display 471 of the user that has sent a message as well as the message contents 472, thus allowing, as a result, the information provider to directly confirm the contents of the message transmitted from the corresponding user.

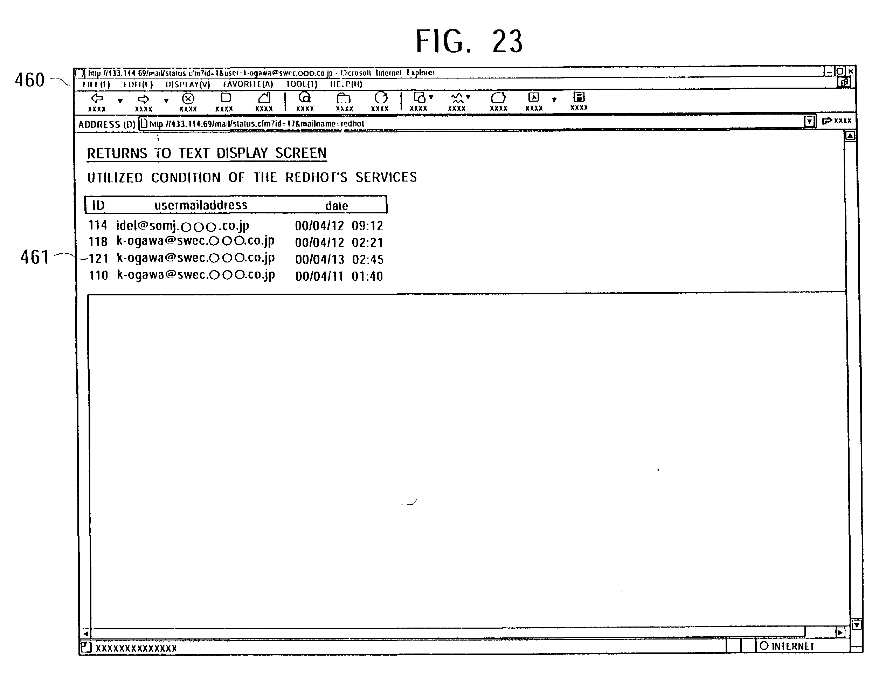

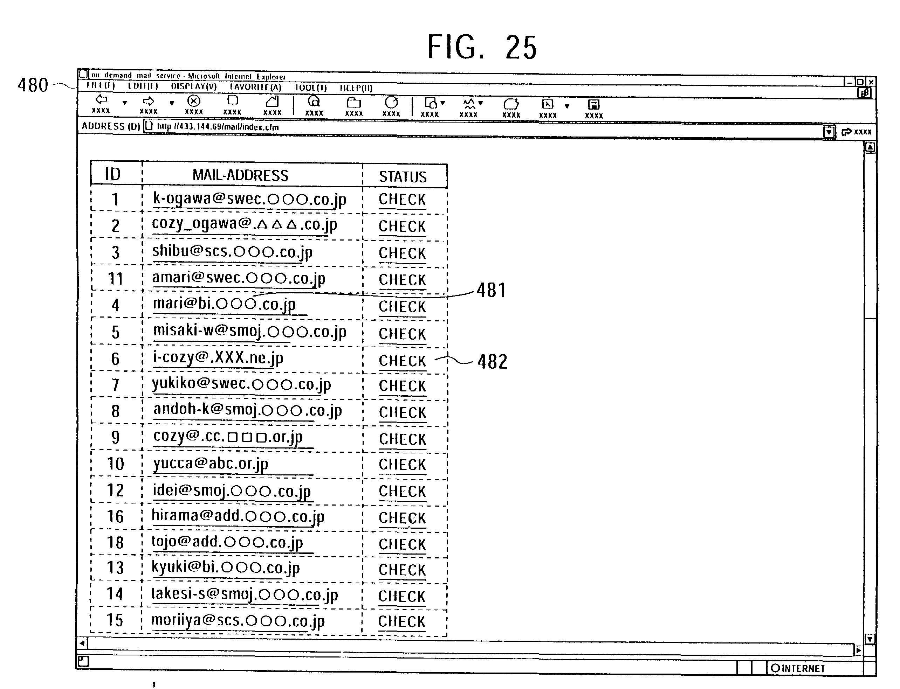

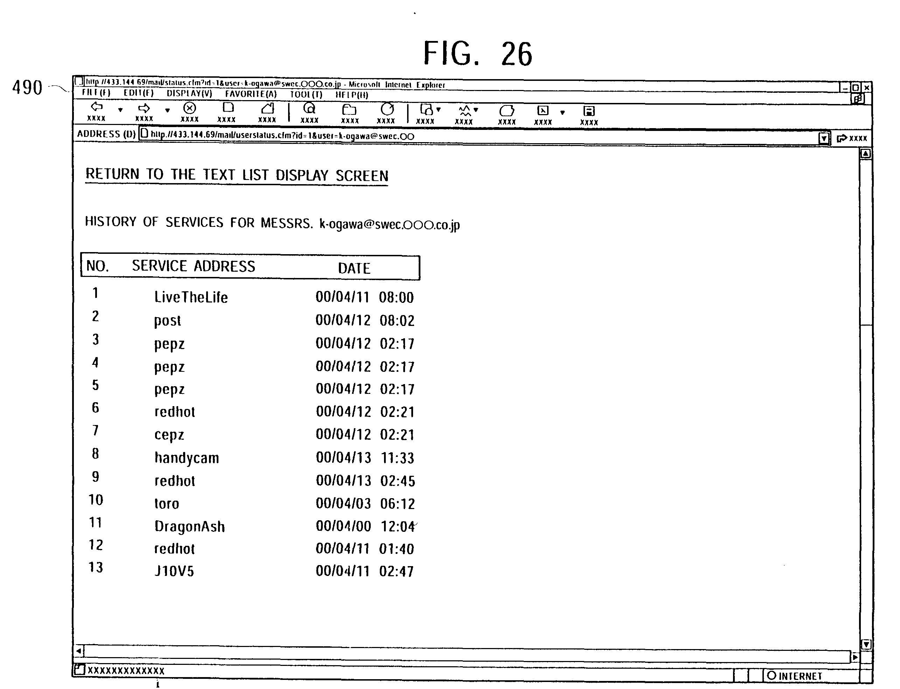

In addition. when the above information provider acquires further information on the user utilizing the registered information, for example, by executing a predetermined operation based on the management page 440 shown in FIG. 21 or the page 460 for confirming actual condition of the utilization of information shown in FIG. 23, the information provider is enabled to view the pages 480 and 490 shown in FIG. 25 and FIG. 26 so as to further enabling the information provider to perform detailed analysis on the users utilizing the registered information.

The page 480 shown in FIG. 25 displays an overview for displaying those users who have actually utilized the information on the registered goods and services, where the overview describes information 481 on those users who have actually collected the registered information and also information 482 on the link with the page for confirming the information-collected condition on the part of the registered users.

In addition, the information page 490 shown in FIG. 26 is an information page that can be acquired by the information provider selecting the link information 482 on the link to the page for confirming the condition of collected by of each user on the overview page 480 shown in FIG. 25, which shows the users who actually utilized the information of the goods and services. As shown in FIG. 25, the above information page 490 shows what information each user has collected.

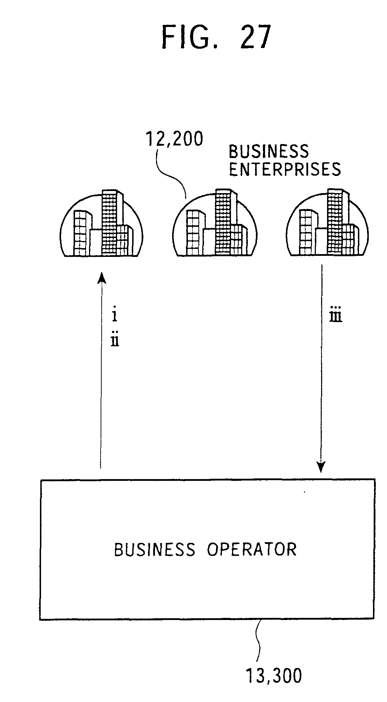

Finally, by referring to FIG. 27 to FIG. 29, flow of an information providing service based on the utilization of the information providing system 10 according to the preferred embodiment of the present invention is described below.

Initially, at step (i), a service provider 13 offers and requests for utilization of services against an information provider 12 including a business enterprise engaged in the marketing of various goods and services.

In the event of the information provider 12 agreeing to utilize the services offered by the service provider 13, step (ii) is entered, in which the service provider 13 authorizes the information provider 12 to utilize the management page 440.

Next, step (iii) is entered, in which, among the approved management page 440, specifically availing of the above-referred page 450 for registration of information shown in FIG. 22, the information provider 12 establishes mail addresses of specific goods and services, registers picture figures, and prepares return mails, whereby completing registration of related information. In this case, the domain name of the mail address becomes the service provider apparatus 300 on the part of the service provider 13.

After completing the above preparatory settings, the information provider 12 executes conventional advertising campaign for promoting sales of the specific goods and services. In other words, a subsequent step (iv) is entered, in which the information provider 12 follows up actual marketing activities by advertisements on TV broadcast programs or setting posters in railway stations, for example. In practice, the information provider 12 first shows a previously set mail address in the advertising medium including an advertisement via TV broadcasting program and posters in order to enable those potential users 11 interested therein to transmit mail inquiries to the designated mail address.

Next, step (v) is entered, in which, potential users 11 who have viewed the actually promoted advertisement and, having found interest in the advertised goods and services, goes to step (vi) in which the user 11 transmits E-mail inquiries to the designated mail address from a customer terminal apparatus 100, such as a portable phone, for example. The transmitted E-mail inquiries are transmitted to the service provider apparatus 300.

If the interested user 11 uses the service offered by the service provider 13 for the first time, a home page exclusively available to this potential user 11 is prepared within the service provider apparatus 300. This leads to the subsequent step (vii), in which information on the corresponding goods and services registered by the information provider 12 is collected into the prepared home page. On the other hand, if the potential user 11 has already utilized the service offered by the service provider 13, inasmuch as the home page corresponding to this potential user 11 has already been prepared in the service provider apparatus 300, information on the corresponding goods and services are merely collected into the already prepared home page.

Next, step (viii) is entered, in which, if the potential user 11 is utilizing the service provider apparatus 300 for the first time, the service provider apparatus 300 transmits a return message previously registered by the information provider 12, URL of the home page exclusively available for this user 11, and a return mail describing a specific password for accessing the above home page, to the customer terminal apparatus 100 of the user 11 who transmitted the above-described E-mail inquiry. The return mail may contain summarized description on the corresponding goods.

After viewing the return mail, step (ix) is entered, in which, by accessing the above described collection page 410 exclusively available for this user contained in the service provider apparatus 300 from the customer terminal apparatus 100 as a personal computer incorporating the WWW viewing function, the user 11 is enabled to view the information on the goods and services of interest thenceforth.

Next, step (x) is entered, in which, as described earlier, by writing message in the collection page 410 exclusively available for this user 11, communication can be exchanged between those users who are interested in the identical goods and services.

Further, it is also possible to gain access to information on the related goods and transmit individual mails to the information provider 12, in other words, to such business enterprises engaged in the marketing of the corresponding goods and services.

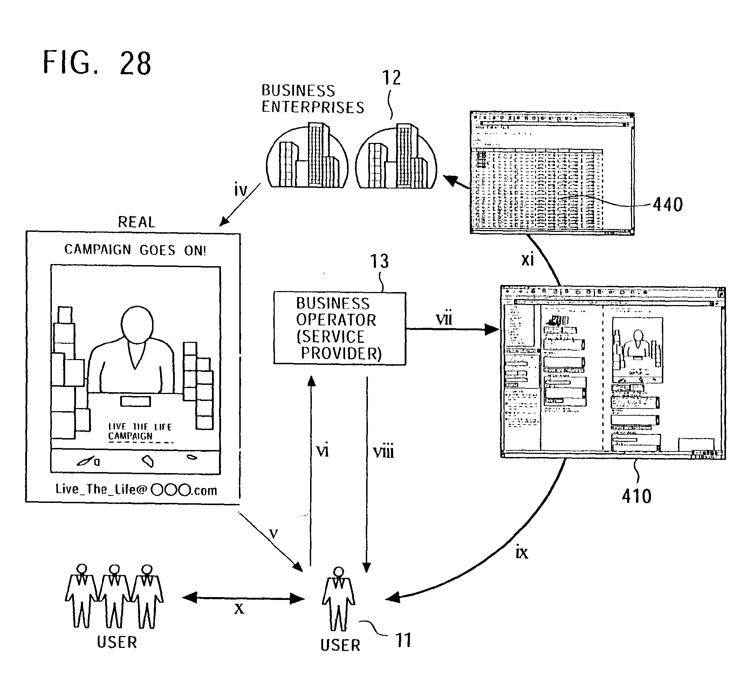

By properly accessing the service provider apparatus 300 from the information provider apparatus 200 and further accessing the management page 440 shown in FIG. 21, the information provider 12 is enabled to acquire information collected by the users 11 on the information of the goods and services registered by the information provider 12 as well as information collected by those users in regard to other goods and services, whereby the information provider 12 is enabled to gain access to a variety of information substantial to the marketing activity, corresponding to step (xi) in FIG. 28.

In addition, the information provider 12 is enabled to view individual messages from the users 11 and answer back to them. As a result, it is possible for the user 11 and the information provider 12 to communicate with each other in both directions.

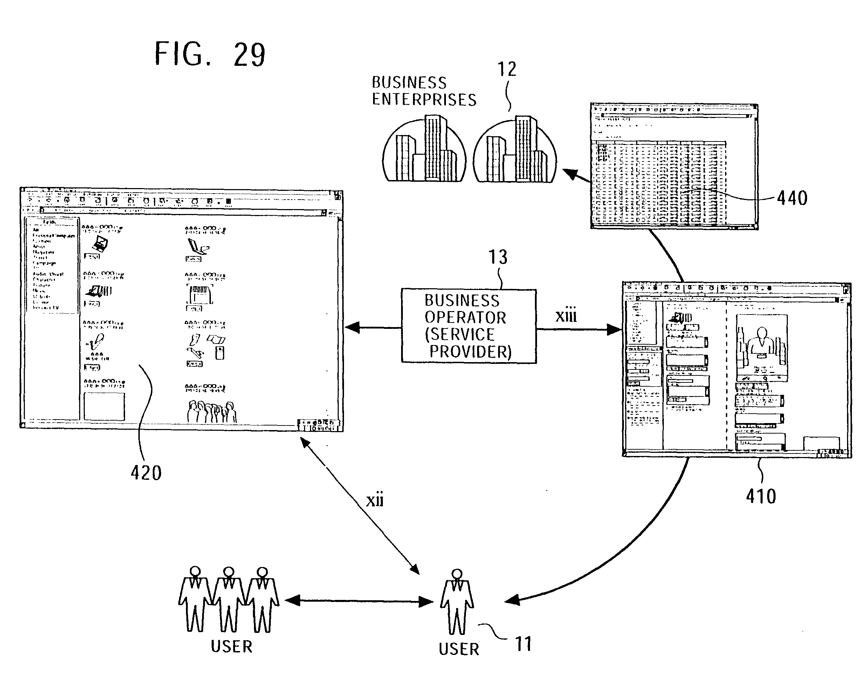

The above description has exemplified the process for collecting information via electronic mail (E-mail). Any of those users 11 once registered in the service provider apparatus 300, in other words, any of those users 11 having the user exclusive collection page 410 in the service provider apparatus 300, is enabled to collect desired information from the home page offered by the service provider apparatus 300, as shown in FIG. 29.

In other words, by accessing the home page 420 for having an overview of registered information shown in FIG. 14 set in the service provider apparatus 300 from the customer terminal apparatus 100, any of the users 11 selects a service button corresponding to the desired goods and services, corresponding to step (xii).

As a result, information related to the desired goods and services is collected into the collection page 410 exclusively available for the user, this corresponding to step (xiii).

Those serial processes to be executed afterwards, including a process of viewing the user exclusive collection page 410, a process to be executed by the information provider 12 for acquiring information on the collected contents, and such processes to exchange messages between the users 11 and the information provider 12, are exactly identical to those processes for collecting information on the desired goods and services described earlier.

By enabling the service provider 13 to impose charge on the utilization of the information services, the entire information providing system 10 as a whole may function as a business system.

In order to realize this, initially, each of the users 11 secures his specific home page by utilizing the services offered by the service provider 13. In return, it is conceived that each of the users 11 pays an amount of fee to the service provider 13 for the operation of collecting relevant information on the desired goods and services.

The method of computing the fee may be determined according to the capacity of the established home page or according to the rounds of collecting information or volume or amount of collected information.

In addition, a form may also be introduced, in which, when a user 11 views an advertisement presented by an advertising sponsor, the information provider 12 bears payable fee in favor of the user 11 whereby enabling the user 11 to utilize the information service substantially free of charge.

It is also conceivable that the information provider 12 pays a fee to the service provider 13 for those set of services including registration of mail address, pictures, and return mail, and for the provision of the environment for enabling communication with the users 11.

It is also conceivable that the information provider 12 further pays an amount to the service provider 13 for the purchase of a report on user's favorites obtained by data analysis, reception of relevant information on the management of the users 11, display of advertisement on the user exclusive home page, and other conceivable additional services, or the like.

It is also conceivable that the advertising sponsor 14 will also pay a fee to the service provider 13 for the exchange of messages in the course of rendering services or for the displaying of various advertisements on the WWW page.

As described above, any of the users 11 is enabled to request for provision of the information of interest via a portable phone in the information providing system 10 according to the preferred embodiment of the present invention, and thus, whenever the user 11 is interested in the goods or services advertised via TV broadcasting programs or posters, for example, he / she can immediately request the information provider 12 for provision of the information on the goods or services of interest without considerable time lag. This in turn prevents the corresponding user 11 from losing specific interest in the advertised goods or services via passage of time or missing or forgetting to take note of the URL. This also enables the information provider 12 to prevent a chance to come into contact with the interested user, in other words, prevents a chance to sell the goods or services of interest from being missed.

In addition, in contrast with utilizing a personal computer like in earlier days, inasmuch as having been extraordinarily popularized, a greater number of people can utilize portable phones. In other words, portable phones can provide an increased variety of information to a greater number of people.

Moreover, each of the users 11 can request for provision of information by transmitting an E-mail message. Inasmuch as the mailing function constitutes one of the most fundamental functions of communication, a portable phone, PHS, and a normal PDA, are capable of establishing mail communication without specific limitation. As a result, a greater number of people can receive services offered by the information providing system 10 by applying a conventional communication terminal apparatus.

In addition, inasmuch as individual users 11 can request for provision of information on the interested goods and service by merely inputting user's specific mail address, input operation can be performed easily compared with the case of requesting for provision of information by inputting a WWW.

In addition, usually, in order to retrieve the desired information via URL, it is required to repeat several rounds of retrieving operations from the top page. On the other hand, when utilizing the information providing system 10, inasmuch as the requesting user 11 utilizes a mail address established per goods and services, the user 11 is enabled to immediately specify the desired goods or services merely by transmitting E-mail message, and then acquires the related data.

Also, in response to the mail inquiry, an E-mail describing information on the desired goods or services is immediately and automatically returned to the user 11. This enables the user 11 to acquire the desired information in short time while still having interest in the corresponding goods or services. This in turn enables the information provider 12 to notifying the user 11 of details on the goods or services in which he is still interested, whereby promoting the advertised effect.

In addition, inasmuch as the return mail is stored in the customer terminal apparatus 100 comprising a portable phone set, the user can review the stored information without necessarily taking note of this information.

Further, in the information providing system 10 according to the preferred embodiment of the present invention, by accessing a URL shown in the return mail, the user can gain access to further details of the goods or services of interest. In practice, the user can receive further details of information and/or picture that otherwise can hardly be conveyed via an E-mail message. As a consequence, a user willing of knowing further details of the related information can easily acquire the desired information without any burden.

In addition, when the user 11 desires to know further details than that is provided via the WWW net service, he can address a further inquiry to the information provider 12 through an E-mail. In response, it is possible for the information provider 12 to answer back the inquired requirements to the corresponding user 11 via the service provider apparatus 300. The service provider apparatus 300 also provides a communication environment between the above user 11 and the information provider 12, whereby facilitating introduction and marketing of various goods and services.

As described above, the information providing system 10 according to the preferred embodiment of the present invention enables the user 11 to initially learn summarized data of the goods and services of interest via the returned E-mail, and then, by accessing the corresponding URL, he / she can gain access to further details, and yet, he can clarify dubious points via direct inquiry to the information provider 12 via E-mail. Accordingly, the registered users can acquire an appropriate amount of data in correspondence with the degree of the interest in the corresponding goods or services.

Further, in the information providing system 10 according to the preferred embodiment of the present invention, a collection page 410 exclusively available for an individual user 11 is provided for each of the users 11 for enabling an individual user 11 to collecting desired information on the goods or services of interest. This enables individual users 11 to acquire the desired information on a desired form.

Further, it is possible to automatically renew a once-collected information whenever the information provider 12 renews the contents thereof. This enables an individual user 11 to retrieve the information on the identical goods or services repeatedly, thus enabling the users 11 to easily retrieve the related information without necessarily collecting them.

In addition, by loading the settling function into the user's collection page 410, it is possible for the users 11 to purchase the goods collected in the user's collection page 410 via the on-line settling means.

Further, in the information providing system 10 according to the preferred embodiment of the present invention, by enabling individual users 11 to write their specific notes in their specific collection page 410, retrieve information on the related goods or services, and write notes on the bulletin board, the inventive system 10 provides such function to follow up mutual communication between those users 11 interested in the identical goods or services, thus facilitating user's purchasing activities, as a consequence.

Further, by utilizing the information providing system 10 according to the preferred embodiment of the present invention, actual data related to the desired goods or services are assigned to the E-mail message or the user's specific home page. As a result, the actual advertising activity via TV broadcasting program or posters can be concentrated in its original function of transmitting basic concepts and presentation of images, whereby making it possible to accomplish an advertisement featuring a novel and freer form.

It should be understood that the scope of the present invention is not limited to the above-exemplified preferred embodiments, but a wide variety of other arbitrary and appropriate changes, combinations and sub-combinations may also be implemented without departing from the scope of the invention.

For example, a construction of the customer terminal apparatus 100, the information provider apparatus 200, and the service provider apparatus 300 shown in FIG. 2 are not limited to those which are exemplified in the above description.

In particular, it is acceptable to have a construction of the customer terminal apparatus 100 in which, by realizing a construction in which the functions of the customer terminal apparatus 100 described for the information providing system 10 according to the preferred embodiment of the present invention can be realized as a whole by utilizing a plurality of apparatuses of limited functionality, so that the construction of each individual apparatus is not limited to those which are described above. In other words, it is also allowable to provide a construction in which, for example, by at least enabling an individual user to operate a portable phone incorporating a function for transmitting and/or receiving a mail message and a personal computer capable of viewing a WWW message, this user is enabled to fully receive services offered by the information providing system 10 according to the preferred embodiment of the present invention.

It should also be understood that, the logical construction of the service provider apparatus 300 shown in FIG. 3, definition, construction, data contents, data form of individual tables of the data base 313, and construction of display screen of individual web pages, are not limited to those preferred embodiments of the present invention described above, but they may be subject to arbitrary changes, variations or combination, sub-combinations as well.

## Claims

1. An information providing method comprising the following steps of:
establishing an exclusive web page for a user;
accepting a request from said user for provision of information on a requested content to be provided; and
setting said exclusive web page to a condition permitting said user to view said information on said requested content to be provided.

2. The information providing method according to Claim 1, further comprising the following steps of:
setting up an electronic mail address corresponding to said information on said requested content to be provided;
notifying said user of at least part of said information on said requested content to be provided and said electronic mail address through an arbitrary method;
receiving an electronic mail transmitted from said user to said notified electronic mail address as a request from said user for provision of corresponding information on said requested content to be provided;
assigning said exclusive web page to said user, wherein said exclusive web page can be accessed from said user transmitting said received electronic mail;
setting said exclusive web page to a condition permitting said user to at least view information corresponding to said requested information, wherein said information is more detailed than said notified information on said requested content to be provided and
transmitting a reply mail at least including address information on said assigned web page to the transmitter of said received electronic mail.

3. The information providing method according to Claim 2, wherein said notifying is performed by means of an arbitrary advertising medium including a TV commercial message and/or a poster.

4. The information providing method according to Claim 2, wherein said reply mail includes a password for accessing said exclusive web page.

5. The information providing method according to Claim 2, wherein said reply mail includes part of said information on said requested content to be provided.

6. The information providing method according to Claim 1, further comprising the following steps of:
establishing another web page permitting viewing an overview of information on contents to be provided; and
accepting said request from said user for provision of said information on said content to be provided by recognizing that said user has requested provision of said content to be provided if said user selects information on a specific content to be provided from said another web page.

7. The information providing method according to Claim 1, further comprising the step of setting another condition permitting viewing of further detailed information on said content to be provided, if there is a further request for provision of information on another content from a user already having said exclusive web page .

8. The information providing method according to Claim 1, wherein said exclusive web page is further set to a condition permitting transmission of an electronic message to a provider of said information on said content to be provided.

9. The information providing method according to Claim 1, wherein said exclusive web page is further set to a condition permitting retrieving and viewing another content to be provided related to said information on said content to be provided.

10. The information providing method according to Claim 1, wherein said exclusive web page is further set to a condition permitting a user requesting provision of information on a same content to be provided, to write a message on a bulletin board.

11. The information providing method according to Claim 1, wherein said exclusive web page is further set to a condition permitting said user to write a memo on said exclusive web page.

12. The information providing method according to Claim 1, wherein
said information on said content to be provided corresponds to information inputted and stored by a provider of said information on said content to be provided; and
information on said content to be provided set to said condition permitting said user to view said information is renewed in accordance to renewal of said stored information.

13. The information providing method according to any of Claim 1, further comprising the steps of:
recording a condition information indicating a condition of request for provision of information on each content to be provided; and
providing, under request, said recorded condition information to a provider of said information on said content to be provided.

14. The information providing method according to Claim 13, wherein said condition information indicating a condition of request for provision of said information on said content to be provided includes name of a person requesting provision of said information and time of said request for provision.

15. The information providing method according to Claim 8, further comprising the following steps of:
recording delivery information indicating a condition of delivery of information for each user; and
providing said provider with information indicating a condition of request for provision of information including a request for provision of information on another content made by a user who has requested provision of said information on said content to be provided, wherein said providing is performed in response to a request from said provider of said information on said content to be provided.

16. The information providing method according to Claim 1, wherein said information on said content to be provided comprises advertising information for advertising a good and/or service.

17. An information providing system comprising:
an information providing apparatus including:
a storing means for storing information on a content to be provided;
an information request reception means for receiving a request from a user for provision of said stored information on said content to be provided; and
a user web page providing means for establishing an exclusive web page for each user and setting said exclusive web page to a condition permitting viewing said information requested by said user through said information request reception means;
a first user apparatus for requesting to said information providing apparatus, provision of said information on said content to be provided;
a second user apparatus for accessing said exclusive web page established in said information providing apparatus and viewing said information on said content to be provided; and
an information provider apparatus for providing to said information providing apparatus information on a designated content to be provided.

18. The information providing system according to Claim 17, wherein said first user apparatus requests provision of said information upon transmitting an electronic mail to said information providing apparatus.

19. The information providing system according to Claim 18, wherein said information providing apparatus further comprises a mail replying means for transmitting to said first user apparatus transmitting said electronic mail, a replying mail including at least information on said established web page address of a user transmitting said electronic mail, if said request for provision of said information is made through said electronic mail.

20. The information providing system according to Claim 18, wherein said electronic mail replying means transmits a reply mail including a password information for accessing said established web page.

21. The information providing system according to Claim 18, wherein said mail replying means transmits a reply mail including part of information on said content to be provided.

22. The information providing system according to Claim 17, wherein
said information providing apparatus further comprises a means for providing an overview web page for providing an overview of stored information on said content to be provided; and
said first user apparatus accesses said overview web page and requests provision of desired information by selecting said information.

23. The information providing system according to Claim 17, further comprising an information provider apparatus for providing information on said content to be provided, wherein said information provider apparatus includes a communication apparatus of an information provider and is capable of communicating with said information providing apparatus; wherein
said information providing apparatus further comprises an information provider communication means for transmitting a message inputted through said exclusive web page to said information provider apparatus and displaying a message transmitted from said information provider apparatus on said web page.

24. The information providing system according to Claim 17, wherein said information providing apparatus further comprises a request condition managing means for recording information indicating a condition of request for provision of information on said content to be provided, and providing said recorded information indicating said condition of request to said information provider, in response to a request from said information provider apparatus.

25. The information providing system according to Claim 17, wherein said information providing apparatus further comprises a user information managing means for recording information indicating a condition of request for provision of information for each user, and providing information indicating said condition of request for provision from a user performing request for information provided by said information provider apparatus, including a request for provision of information on another content, to said information provider, in response to a request from said information provider apparatus.

26. An information providing apparatus comprising:
a storing means for storing information on a content to be provided;
an information request reception means for receiving a request from a user for provision of said stored information on said content to be provided; and
a user web page providing means for establishing an exclusive web page for each user and setting said exclusive web page to a condition permitting viewing said requested information.

27. The information providing apparatus according to Claim 26, wherein:
said information request reception means receives a request for provision of said information through an electronic mail; and
said information providing apparatus further comprises a mail replying means for transmitting to a transmitter of said electronic mail, a replying mail including at least information on said established web page address of a user transmitting said electronic mail.

28. The information providing apparatus according to Claim 27, wherein said mail replying means transmits a reply mail including password for accessing said established web page.

29. The information providing apparatus according to Claim 27, wherein said mail replying means transmits a reply mail including part of said information on said content to be provided.

30. The information providing apparatus according to Claim 26, further comprising a means for providing an overview web page for providing an overview of stored information on said content to be provided, wherein
said information request reception means receives a request for provision of selected information when desired information is selected from said overview web page.

31. The information providing apparatus according to Claim 26, further comprising an information provider communication means for transmitting a message inputted through said exclusive web page to said information provider apparatus and displaying a message transmitted from said information provider apparatus on said web page.

32. The information providing apparatus according to Claim 26, further comprising a related information retrieving means for retrieving information on another content related to said information on said content to be provided and setting said retrieved information on said another content to a condition permitting viewing said information, wherein said information on said content to be provided is set to a condition permitting viewing said requested information on said exclusive web page.

33. The information providing apparatus according to Claim 26, further comprising a bulletin-board accessing means for enabling a user requesting provision of a similar information to write a message on a bulletin board and display said message.

34. The information providing apparatus according to Claim 26, further comprising a memo storing means for storing an arbitrary memo inputted through said exclusive web page.

35. The information providing apparatus according to Claim 26, wherein said user web page providing means renews said information on said content set to a condition permitting viewing, in response to a renewal of said stored information on said content to be provided.

36. The information providing apparatus according to Claim 26, further comprising a request condition managing means for recording information indicating a condition of request for provision of information on said content to be provided, and providing said recorded information indicating said condition of request to said information provider, in response to a request from said information provider.

37. The information providing apparatus according to Claim 36, wherein said information indicating said condition of request for provision of information on said content to be provided includes a name of person requesting said provision of said information and a time of said request.

38. The information providing apparatus according to Claim 26, further comprising a user information managing means for recording information indicating a condition of request for provision of information for each user, and providing information indicating said condition of request for provision from a user performing request for information provided by said information provider, including a request for provision of information on another content, to said information provider, in response to a request from said information provider.
